(19) Europäisches Patentamt
European Patent Office
Office européen des brevets

(11) EP 2 092 045 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**22.04.2020 Patentblatt 2020/17**

(45) Hinweis auf die Patenterteilung:
**09.11.2016 Patentblatt 2016/45**

(21) Anmeldenummer: **07822682.6**

(22) Anmeldetag: **16.11.2007**

(51) Int Cl.:
***C10L 1/197*** *(2006.01)* ***C10M 145/14*** *(2006.01)*
***C10L 10/14*** *(2006.01)* ***C08F 210/02*** *(2006.01)*

(86) Internationale Anmeldenummer:
**PCT/EP2007/062465**

(87) Internationale Veröffentlichungsnummer:
**WO 2008/059055 (22.05.2008 Gazette 2008/21)**

(54) **KALTFLIESSVERBESSERER**

COLD FLOW IMPROVER.

AGENT D'AMÉLIORATION DE L'ÉCOULEMENT À FROID.

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.11.2006 EP 06124356**

(43) Veröffentlichungstag der Anmeldung:
**26.08.2009 Patentblatt 2009/35**

(73) Patentinhaber: **BASF SE**
**67056 Ludwigshafen am Rhein (DE)**

(72) Erfinder:
- **MÄHLING, Frank-Olaf**
**68165 Mannheim (DE)**
- **PFEIFFER, Thomas**
**67459 Böhl-Iggelheim (DE)**
- **REBHOLZ, Uwe**
**67678 Mehlingen (DE)**
- **TRÖTSCH-SCHALLER, Irene**
**67281 Bissersheim (DE)**
- **ZELINSKI, Thomas**
**67271 Neuleiningen (DE)**

(56) Entgegenhaltungen:

| | |
|---|---|
| **EP-A- 1 674 554** | **EP-A1- 1 391 498** |
| **WO-A-2005/054314** | **WO-A-2006/111326** |
| **WO-A1-96/17905** | **DE-A1- 1 902 925** |
| **DE-A1- 3 725 059** | **FR-A1- 2 122 425** |
| **FR-A1- 2 603 591** | **FR-A1- 2 618 792** |
| **US-A- 3 467 597** | **US-A- 4 155 719** |
| **US-A1- 2005 126 070** | **US-A1- 2006 137 242** |

- **Buback, M.: "High-pressure free-radical copolymerization of ethene and 2-ethylhexyl acrylate", Macromol. Chem. Phys., 1996, pages 4119-4134,**
- **Yu, M.: "Gradient Copolymers : Synthesis, Structure, and Properties", Polymer Science, vol. 51, no. 1, 2009, pages 103-122,**



Printed by Jouve, 75001 PARIS (FR)

## Beschreibung

Die Erfindung betrifft die Verwendung von Polymeren, die ein α-Olefin, wenigstens einen Alkenylester und wenigstens zwei Ester α,β-ungesättigter Carbonsäuren mit höheren Alkoholen einpolymerisiert enthalten, als Kaltfließverbesserer für Brennstofföle und Schmierstoffe und insbesondere als Kaltfließverbesserer in Brennstoffölen; die mit diesen Polymeren additivierten Brennstofföle und Schmierstoffe; sowie Additivpakete, enthaltend derartige Copolymere. Außerdem betrifft die Erfindung quaternäre und höhere Copolymere, welche die oben genannten Monomere einpolymerisiert enthalten.

Paraffinische Wachse enthaltende Mineralöle, wie Mitteldestillate, Diesel und Heizöle, zeigen bei Temperaturerniedrigung eine deutliche Verschlechterung der Fließeigenschaften. Die Ursache hierfür liegt in der ab der Temperatur des Cloud Points auftretenden Kristallisation längerkettiger Paraffine, die große, plättchenförmige Wachskristalle bilden. Diese Wachskristalle besitzen eine schwammartige Struktur und führen zu einem Einschluss anderer Kraftstoffbestandteile in den Kristallverbund. Das Auftreten dieser Kristalle führt schnell zur Verklebung von Kraftstofffiltern sowohl in Tanks als auch in Kraftfahrzeugen. Bei Temperaturen unterhalb des Pour Points (PP) findet schließlich kein Fluss des Kraftstoffs mehr statt.

Zur Behebung dieser Probleme werden schon seit langer Zeit Kraftstoffadditive in kleinen Konzentrationen zugesetzt, die häufig aus Kombinationen von Nukleatoren zur frühen Bildung von Kleinstkristalliten der Paraffine mit den eigentlichen Kaltfließverbesserern (auch als CFI oder MDFI bezeichnet) bestehen. Diese wiederum zeigen ähnliche Kristallisationseigenschaften wie die Paraffine des Kraftstoffs, verhindern jedoch deren Wachstum, so dass ein Passieren des Filters bei im Vergleich zum unadditivierten Kraftstoff deutlich niedrigeren Temperaturen möglich ist. Als Maß dafür wird der sogenannte Cold Filter Plugging Point (CFPP) bestimmt. Als weiteres Additiv können sogenannte Wax Anti Settling Additive (WASA) eingesetzt werden, die das Absinken der Kleinstkristallite im Kraftstoff verhindern.

Kaltfließverbesserer werden je nach Beschaffenheit des Grundkraftstoffs und des Additivs in Mengen von etwa 50 bis 500 ppm zudosiert. Es sind aus dem Stand der Technik verschiedene CFI-Produkte bekannt (vgl. z.B. US-A-3,038,479, 3,627,838 und 3,961,961, EP-A-0,261,957 oder DE-A-31 41 507 und 25 15 805). Gängige CFI sind gewöhnlich polymere Verbindungen, insbesondere Ethylen-Vinylacetat(EVA)-Copolymere, wie z.B. die unter dem Handelsnamen Keroflux von der BASF AG vertriebenen Produkte.

Auch Kombinationen von herkömmlichen CFI mit Schmierfähigkeitsverbesserern (Estern von Mono- oder Polycarbonsäuren mit Mono- oder Polyalkoholen) werden als verbesserte CFI-Kombinationen beschrieben (EP-A-0 721 492).

Die WO 2005/054314 beschreibt die Verwendung von Polymeren, die ein α-Olefin, wenigstens einen Alkenylester und wenigstens einen Ester einer α,β-ungesättigten Carbonsäure einpolymerisiert enthalten, als Kaltfließverbesserer. Als Ester von α,β-ungesättigten Carbonsäuren werden allgemein auch solche genannt, die sich von höheren Alkoholen ableiten. Konkret werden jedoch nur die Ester von Alkoholen mit maximal 8 Kohlenstoffatomen beschrieben.

Es besteht ein fortwährender Bedarf an weiteren Additiven mit CFI-Eigenschaften, insbesondere solchen, welche kostengünstiger einzusetzen sind, beispielsweise deshalb, weil sie in geringerer Dosierung als handelsübliche CFIs die Kaltfließeigenschaften von Brennstoffölen oder Schmierstoffen und insbesondere die Filtrierbarkeit von Brennstoffölen verbessern.

Aufgabe der vorliegenden Erfindung war es dementsprechend, neue derartige Additive bereitzustellen.

Überraschenderweise wurde gefunden, dass höhere Copolymere aus α-Olefinen, wenigstens einem Alkenylester und Estern α,β-ungesättigter Carbonsäuren, in denen die durchschnittliche Anzahl der Kohlenstoffatome im Alkoholbestandteil der α,β-ungesättigten Carbonsäureester, im Säurebestandteil eines gegebenenfalls einpolymerisierten zweiten Alkenylesters und im Alkoholbestandteil eines gegebenenfalls einpolymerisierten α,β-ungesättigten Dicarbonsäureesters 8,5 bis 20 beträgt, deutlich besser handhabbar sind als herkömmliche CFIs und außerdem die Kaltfließeigenschaften von damit additivierten Brennstoffölen und Schmierstoffen noch positiver beeinflussen als herkömmliche CFIs.

Die Aufgabe wurde dementsprechend gelöst durch die Verwendung

eines Polymers B, das aus Monomeren umfassend wenigstens ein Monomer der Formel M1, wenigstens ein Monomer der Formel M2, wenigstens zwei Monomere der Formel M3, gegebenenfalls wenigstens ein Monomer der Formel M4 und gegebenenfalls wenigstens ein Monomer der Formel M5 aufgebaut ist, wobei M1, M2, M3, M4 und M5 die folgenden allgemeinen Formeln besitzen:

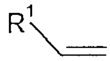 M1

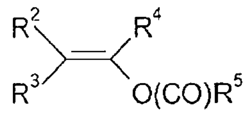

M2

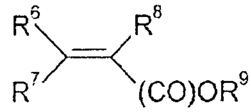

M3

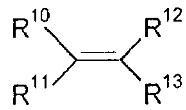

M4

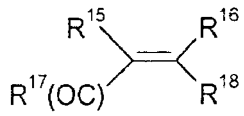

M5

worin

$R^1$ für H oder $C_1$-$C_{40}$-Alkyl steht;
$R^2$, $R^3$ und $R^4$ unabhängig voneinander für H oder $C_1$-$C_4$-Alkyl stehen;
$R^5$ für $C_1$-$C_{20}$-Alkyl steht;
$R^6$, $R^7$ und $R^8$ unabhängig voneinander für H oder $C_1$-$C_4$-Alkyl stehen;
$R^9$ im ersten Monomer M3 für $C_4$-$C_{20}$-Alkyl steht und im zweiten und in jedem weiteren Monomer M3 für$C_9$-$C_{20}$-Alkyl steht, wobei die Reste $R^9$ in den verschiedenen Monomeren M3 verschieden sind;
$R^{10}$, $R^{11}$ und $R^{12}$ unabhängig voneinander für H oder $C_1$-$C_4$-Alkyl stehen;
$R^{13}$ für O(CO)$R^{14}$ steht;
$R^{14}$ für $C_3$-$C_{19}$-Alkyl steht;
$R^{15}$ für H oder $C_1$-$C_4$-Alkyl steht;
$R^{17}$ für O$R^{19}$ steht;
einer der Reste $R^{16}$ und $R^{18}$ für -(CO)$R^{20}$ steht und der andere Rest für H oder $C_1$-$C_4$-Alkyl steht;
$R^{20}$ für O$R^{21}$ steht; und
$R^{19}$ und $R^{21}$ unabhängig voneinander für H oder$C_1$-$C_{20}$-Alkyl stehen;
oder $R^{17}$ und $R^{20}$ bilden gemeinsam eine Gruppe -O-;
mit der Maßgabe, dass die durchschnittliche Anzahl der Kohlenstoffatome aller Reste $R^9$, $R^{13}$, $R^{19}$ und $R^{21}$ 8,5 bis 20 beträgt und dass $R^5$ und $R^{14}$ verschieden sind, und
wobei in wenigstens einem Monomer M3 $R^9$ für einen verzweigten Alkylrest steht und das Molverhältnis von Monomeren M3 mit verzweigtem Alkylrest $R^9$ zu Monomeren M3 mit linearem Alkylrest $R^9$ 1:5 bis 1:0 beträgt;
wobei es sich bei Polymer B nicht um ein Pfropfcopolymer handelt; und wobei das Polymer B die Monomere M1, M2, M3, gegebenenfalls M4 und gegebenenfalls M5 im Wesentlichen in statistischer Verteilung enthält;
als Kaltfließverbesserer für Brennstofföle und Schmierstoffe.

Werden keine anderen Angaben gemacht, so gelten im Rahmen der vorliegenden Erfindung folgende allgemeine Definitionen:

$C_1$-$C_{40}$-Alkyl steht für einen linearen oder verzweigten Alkylrest mit 1 bis 40 Kohlenstoffatomen. Beispiele hierfür sind Methyl, Ethyl, n-Propyl, Isopropyl, n-Butyl, sec-Butyl, Isobutyl, tert-Butyl, Pentyl, Hexyl, Heptyl, Octyl, 2-Ethylhexyl, Nonyl, Decyl, 2-Propylheptyl, 4-Methyl-2-propylhexyl, Undecyl, Dodecyl, Tridecyl, Tetradecyl, Pentadecyl, Hexadecyl, Heptadecyl, Octadecyl, Nonadecyl, Eicosyl, Hencosyl, Docosyl, Tricosyl, Tetracosyl, Pentacosyl, Hexacosyl, Heptacosyl, Octacosyl, Nonacosyl, Squalyl, deren Konstitutionsisomere, höheren Homologen sowie die dazugehörigen Konstitutionsisomere.

$C_1$-$C_{20}$-Alkyl steht für einen linearen oder verzweigten Alkylrest mit 1 bis 20 Kohlenstoffatomen. Beispiele hierfür sind Methyl, Ethyl, n-Propyl, Isopropyl, n-Butyl, sec-Butyl, Isobutyl, tert-Butyl, Pentyl, Neopentyl, Hexyl, Heptyl, Octyl, 2-Ethylhexyl, Nonyl, Decyl, 2-Propylheptyl, 4-Methyl-2-propylhexyl, Undecyl, Dodecyl, Tridecyl, Tetradecyl, Pentadecyl, Hexadecyl, Heptadecyl, Octadecyl, Nonadecyl, Eicosyl und deren Konstitutionsisomere.

$C_1$-$C_{10}$-Alkyl steht für einen linearen oder verzweigten Alkylrest mit 1 bis 10 Kohlenstoffatomen. Beispiele hierfür sind Methyl, Ethyl, n-Propyl, Isopropyl, n-Butyl, sec-Butyl, Isobutyl, tert-Butyl, Pentyl, Hexyl, Heptyl, Octyl, 2-Ethylhexyl, Nonyl, Decyl, 2-Propylheptyl, 4-Methyl-2-propylhexyl und deren Konstitutionsisomere.

$C_1$-$C_9$-Alkyl steht für einen linearen oder verzweigten Alkylrest mit 1 bis 9 Kohlenstoffatomen. Beispiele hierfür sind Methyl, Ethyl, n-Propyl, Isopropyl, n-Butyl, sec-Butyl, Isobutyl, tert-Butyl, Pentyl, Hexyl, Heptyl, Octyl, 2-Ethylhexyl, Nonyl und deren Konstitutionsisomere.

$C_1$-$C_4$-Alkyl steht für einen linearen oder verzweigten Alkylrest mit 1 bis 4 Kohlenstoffatomen. Beispiele hierfür sind Methyl, Ethyl, n-Propyl, Isopropyl, n-Butyl, sec-Butyl, Isobutyl und tert-Butyl.

$C_1$-$C_3$-Alkyl steht für einen linearen oder verzweigten Alkylrest mit 1 bis 3 Kohlenstoffatomen. Beispiele hierfür sind Methyl, Ethyl, n-Propyl und Isopropyl.

$C_{11}$-$C_{13}$-Alkyl steht für einen linearen oder verzweigten Alkylrest mit 11 bis 13 Kohlenstoffatomen. Beispiele hierfür sind Undecyl, Dodecyl, Tridecyl sowie deren Konstitutionsisomere.

$C_{10}$-$C_{12}$-Alkyl steht für einen linearen oder verzweigten Alkylrest mit 10 bis 12 Kohlenstoffatomen. Beispiele hierfür sind Decyl, 2-Propylheptyl, 4-Methyl-2-propylhexyl, Undecyl, Dodecyl sowie deren Konstitutionsisomere. $C_{10}$-$C_{14}$-Alkyl steht für einen linearen oder verzweigten Alkylrest mit 10 bis 14 Kohlenstoffatomen. Beispiele hierfür sind neben den zuvor für $C_{10}$-$C_{12}$-Alkyl genannten Alkylresten Tridecyl und Tetradecyl sowie deren Konstitutionsisomere. $C_{10}$-$C_{16}$-Alkyl steht für einen linearen oder verzweigten Alkylrest mit 10 bis 16 Kohlenstoffatomen. Beispiele hierfür sind neben den zuvor für $C_{10}$-$C_{14}$-Alkyl genannten Alkylresten Pentadecyl und Hexadecyl sowie deren Konstitutionsisomere. $C_{10}$-$C_{18}$-Alkyl steht für einen linearen oder verzweigten Alkylrest mit 10 bis 18 Kohlenstoffatomen. Beispiele hierfür sind neben den zuvor für $C_{10}$-$C_{16}$-Alkyl genannten Alkylresten Heptadecyl und Octadecyl sowie deren Konstitutionsisomere. $C_{10}$-$C_{20}$-Alkyl steht für einen linearen oder verzweigten Alkylrest mit 10 bis 20 Kohlenstoffatomen. Beispiele hierfür sind neben den zuvor für $C_{10}$-$C_{18}$-Alkyl genannten Alkylresten Nonadecyl und Eicosanyl sowie deren Konstitutionsisomere.

$C_9$-$C_{12}$-Alkyl steht für einen linearen oder verzweigten Alkylrest mit 9 bis 12 Kohlenstoffatomen. Beispiele hierfür sind neben den zuvor für $C_{10}$-$C_{12}$-Alkyl genannten Alkylresten Nonyl und Konstitutionsisomere davon. $C_9$-$C_{13}$-Alkyl steht für einen linearen oder verzweigten Alkylrest mit 9 bis 13 Kohlenstoffatomen. Beispiele hierfür sind neben den zuvor für $C_9$-$C_{12}$-Alkyl genannten Alkylresten Tridecyl und Konstitutionsisomere davon. $C_9$-$C_{14}$-Alkyl steht für einen linearen oder verzweigten Alkylrest mit 9 bis 14 Kohlenstoffatomen. Beispiele hierfür sind neben den zuvor für $C_9$-$C_{13}$-Alkyl genannten Alkylresten Tetradecyl und Konstitutionsisomere davon. $C_9$-$C_{15}$-Alkyl steht für einen linearen oder verzweigten Alkylrest mit 9 bis 15 Kohlenstoffatomen. Beispiele hierfür sind neben den zuvor für $C_9$-$C_{14}$-Alkyl genannten Alkylresten Pentadecyl und Konstitutionsisomere davon. $C_9$-$C_{16}$-Alkyl steht für einen linearen oder verzweigten Alkylrest mit 9 bis 16 Kohlenstoffatomen. Beispiele hierfür sind neben den zuvor für $C_9$-$C_{15}$-Alkyl genannten Alkylresten Hexadecyl und Konstitutionsisomere davon. $C_9$-$C_{18}$-Alkyl steht für einen linearen oder verzweigten Alkylrest mit 9 bis 18 Kohlenstoffatomen. Beispiele hierfür sind neben den zuvor für $C_9$-$C_{16}$-Alkyl genannten Alkylresten Heptadecyl und Octadecyl sowie deren Konstitutionsisomere. $C_9$-$C_{19}$-Alkyl steht für einen linearen oder verzweigten Alkylrest mit 9 bis 19 Kohlenstoffatomen. Beispiele hierfür sind neben den zuvor für $C_9$-$C_{18}$-Alkyl genannten Alkylresten Nonadecyl und Konstitutionsisomere davon. $C_9$-$C_{20}$-Alkyl steht für einen linearen oder verzweigten Alkylrest mit 9 bis 20 Kohlenstoffatomen. Beispiele hierfür sind neben den zuvor für $C_9$-$C_{19}$-Alkyl genannten Alkylresten Eicosyl und Konstitutionsisomere davon.

$C_8$-$C_{12}$-Alkyl steht für einen linearen oder verzweigten Alkylrest mit 8 bis 12 Kohlenstoffatomen. Beispiele hierfür sind neben den zuvor für $C_9$-$C_{12}$-Alkyl genannten Alkylresten Octyl, 2-Ethylhexyl und weitere Konstitutionsisomere davon. $C_8$-$C_{14}$-Alkyl steht für einen linearen oder verzweigten Alkylrest mit 8 bis 14 Kohlenstoffatomen. Beispiele hierfür sind neben den zuvor für $C_8$-$C_{12}$-Alkyl genannten Alkylresten Tridecyl, Tetradecyl und Konstitutionsisomere davon. $C_8$-$C_{16}$-Alkyl steht für einen linearen oder verzweigten Alkylrest mit 8 bis 16 Kohlenstoffatomen. Beispiele hierfür sind neben den zuvor für $C_8$-$C_{14}$-Alkyl genannten Alkylresten Pentadecyl, Hexadecyl und Konstitutionsisomere davon. $C_8$-$C_{18}$-Alkyl steht für einen linearen oder verzweigten Alkylrest mit 8 bis 18 Kohlenstoffatomen. Beispiele hierfür sind neben den zuvor für $C_8$-$C_{16}$-Alkyl genannten Alkylresten Heptadecyl und Octadecyl sowie deren Konstitutionsisomere $C_8$-$C_{20}$-Alkyl steht für einen linearen oder verzweigten Alkylrest mit 8 bis 20 Kohlenstoffatomen. Beispiele hierfür sind neben den zuvor für $C_8$-$C_{18}$-Alkyl genannten Alkylresten Nonadecyl, Eicosyl und Konstitutionsisomere davon.

$C_7$-$C_8$-Alkyl steht für einen linearen oder verzweigten Alkylrest mit 7 bis 8 Kohlenstoffatomen. Beispiele hierfür sind Heptyl, Octyl, 2-Ethylhexyl und deren Konstitutionsisomere.

$C_6$-$C_8$-Alkyl steht für einen linearen oder verzweigten Alkylrest mit 6 bis 8 Kohlenstoffatomen. Beispiele hierfür sind neben den zuvor für $C_7$-$C_8$-Alkyl genannten Alkylresten Hexyl und Konstitutionsisomere davon. $C_6$-$C_{12}$-Alkyl steht für einen linearen oder verzweigten Alkylrest mit 6 bis 12 Kohlenstoffatomen. Beispiele hierfür sind neben den zuvor für $C_6$-$C_8$-Alkyl genannten Alkylresten Heptyl, Octyl, 2-Ethylhexyl, Nonyl, Decyl, 2-Propylheptyl, 4-Methyl-2-propylhexyl, Undecyl, Dodecyl und deren Konstitutionsisomere. $C_6$-$C_{14}$-Alkyl steht für einen linearen oder verzweigten Alkylrest mit 6 bis 14 Kohlenstoffatomen. Beispiele hierfür sind neben den zuvor für $C_6$-$C_{12}$-Alkyl genannten Alkylresten Tridecyl, Tetradecyl und deren Konstitutionsisomere. $C_6$-$C_{16}$-Alkyl steht für einen linearen oder verzweigten Alkylrest mit 6 bis 16 Kohlenstoffatomen. Beispiele hierfür sind neben den zuvor für $C_6$-$C_{14}$-Alkyl genannten Alkylresten Pentadecyl, He-

xadecyl und deren Konstitutionsisomere. $C_6$-$C_{18}$-Alkyl steht für einen linearen oder verzweigten Alkylrest mit 6 bis 18 Kohlenstoffatomen. Beispiele hierfür sind neben den zuvor für $C_6$-$C_{16}$-Alkyl genannten Alkylresten Heptadecyl, Octadecyl und deren Konstitutionsisomere. $C_6$-$C_{20}$-Alkyl steht für einen linearen oder verzweigten Alkylrest mit 6 bis 20 Kohlenstoffatomen. Beispiele hierfür sind neben den zuvor für $C_6$-$C_{18}$-Alkyl genannten Alkylresten Nonadecyl, Eicosyl und deren Konstitutionsisomere.

$C_3$-$C_{19}$-Alkyl steht für einen linearen oder verzweigten Alkylrest mit 3 bis 19 Kohlenstoffatomen. Beispiele hierfür sind Beispiele hierfür sind neben den zuvor für $C_9$-$C_{19}$-Alkyl genannten Alkylresten Methyl, Ethyl, n-Propyl, Isopropyl, n-Butyl, sec-Butyl, Iso-butyl, tert-Butyl, Pentyl, Hexyl, Heptyl, Octyl, 2-Ethylhexyl und deren Konstitutionsisomere.

$C_4$-$C_{20}$-Alkyl steht für einen linearen oder verzweigten Alkylrest mit 4 bis 20 Kohlenstoffatomen. Beispiele hierfür sind neben den zuvor für $C_6$-$C_{20}$-Alkyl genannten Alkylresten n-Butyl, sec-Butyl, Isobutyl, tert-Butyl, Pentyl und Konstitutionsisomere davon.

Verzweigtes $C_9$-$C_{20}$-Alkyl steht für einen nichtlinearen Alkylrest mit 9 bis 20 Kohlenstoffatomen. Vorzugsweise ist das Kohlenstoffatom, über das der Alkylrest an das übrige Molekül gebunden ist, nicht Beginn einer Verzweigung. Beispiele hierfür sind 2-Propylhept-1-yl, 4-Methyl-2-propylhex-1-yl und andere nichtlineare Decylisomere, nichtlineare Undecylisomere, nichtlineare Dodecylisomere, nichtlineare Tridecylisomere, nichtlineare Tetradecylisomere, nichtlineare Pentadecylisomere, nichtlineare Hexadecylisomere, nichtlineare Heptadecylisomere, nichtlineare Octadecylisomere, nichtlineare Nonadecylisomere und nichtlineare Eicosylisomere.

Verzweigtes $C_6$-$C_{20}$-Alkyl steht für einen nichtlinearen Alkylrest mit 6 bis 20 Kohlenstoffatomen. Vorzugsweise ist das Kohlenstoffatom, über das der Alkylrest an den Rest des Moleküls gebunden ist, nicht Beginn einer Verzweigung. Beispiele hierfür sind neben den zuvor beim verzweigten $C_9$-$C_{20}$-Alkyl genannten Resten nichtlineare Hexylisomere, nichtlineare Heptylisomere und nichtlineare Octylisomere, wie 2-Ethylhexyl.

Verzweigtes $C_4$-$C_{20}$-Alkyl steht für einen nichtlinearen Alkylrest mit 4 bis 20 Kohlenstoffatomen. Vorzugsweise ist das Kohlenstoffatom, über das der Alkylrest an den Rest des Moleküls gebunden ist, nicht Beginn einer Verzweigung. Beispiele hierfür sind neben den zuvor beim verzweigten $C_6$-$C_{20}$-Alkyl genannten Resten nichtlineare Pentylisomere, wie Neopentyl, und nichtlineare Butylisomere, wie Isobutyl und, weniger bevorzugt, sec-Butyl sowie tert-Butyl.

$C_1$-$C_4$-Alkoxy steht für einen über Sauerstoff gebundenen linearen oder verzweigten $C_1$-$C_4$-Alkylrest. Beispiele hierfür sind Methoxy, Ethoxy, Propoxy, Isopropoxy, n-Butoxy, sec-Butoxy, Isobutoxy und tert-Butoxy.

Die Alkylreste können unsubstituiert oder ein- oder mehrfach substituiert sein. Geeignete Substituenten sind beispielsweise OH, $C_1$-$C_4$-Alkoxy, $NR^aR^b$ ($R^a$ und $R^b$ stehen unabhängig voneinander für H oder $C_1$-$C_4$-Alkyl) oder Carbonyl ($COR^a$). Vorzugsweise sind sie jedoch unsubstituiert.

**a) Erfindungsgemäß verwendete Polymere**

Die nachfolgend gemachten Ausführungen zu den bevorzugten Ausgestaltungen der erfindungsgemäß eingesetzten Polymere und der Monomere, aus denen sie aufgebaut sind, gelten sowohl für sich als auch insbesondere in Kombination miteinander.

In den erfindungsgemäß eingesetzten Polymeren B beträgt die durchschnittliche Anzahl der Kohlenstoffatome aller Reste $R^9$, $R^{13}$, $R^{19}$ und $R^{21}$ 8,5 bis 20, vor allem 9 bis 20, vorzugsweise 8,5 bis 18, vor allem 9 bis 18, besonders bevorzugt 8,5 bis 16, vor allem 9 bis 16, stärker bevorzugt 8,5 bis 14, vor allem 9 bis 14, noch stärker bevorzugt 8,5 bis 12, insbesondere 9 bis 12, und speziell 10 bis 12. Die durchschnittliche Anzahl der Kohlenstoffatome aller Reste $R^9$, $R^{13}$, $R^{19}$ und $R^{21}$ in i verschiedenen Monomeren M3, in j verschiedenen Monomeren M4 und in k verschiedenen Monomeren M5 lässt sich nach folgender allgemeiner Formel berechnen:

$$\frac{a_1 \cdot b_1 + a_2 \cdot b_2 + \ldots + a_i \cdot b_i + c_1 \cdot d_1 + c_2 \cdot d_2 + \ldots + c_j \cdot d_j + e_1 \cdot f_1 + e_2 \cdot f_2 + \ldots + e_k \cdot f_k + e_1 \cdot g_1 + e_2 \cdot g_2 + \ldots + e_k \cdot g_k}{\sum_i a + \sum_j c + 2 \cdot \sum_k e}$$

worin

$a_1$, $a_2$, ... $a_i$ für den Stoffmengenanteil (Molenbruch) der verschiedenen, im Polymer enthaltenen Monomere M3 stehen;

$b_1$, $b_2$, ... bi für die Anzahl der Kohlenstoffatome im Rest $R^9$ im entsprechenden Monomer M3 stehen;

$c_1$, $c_2$, ... $c_j$ für den Stoffmengenanteil (Molenbruch) der verschiedenen, im Polymer enthaltenen Monomere M4 stehen;

$d_1$, $d_2$, ... $d_j$ für die Anzahl der Kohlenstoffatome im Rest $R^{13}$ im entsprechenden Monomer M4 stehen;

$e_1$, $e_2$, ... $e_k$ für den Stoffmengenanteil (Molenbruch) der verschiedenen, im Polymer enthaltenen Monomere M5

stehen;
$f_1$, $f_2$, ... $f_k$ für die Anzahl der Kohlenstoffatome im Rest $R^{19}$ im entsprechenden Monomer M5 stehen;
$g_1$, $g_2$, ... $g_k$ für die Anzahl der Kohlenstoffatome im Rest $R^{21}$ im entsprechenden Monomer M5 stehen;

$$\sum_i a$$

für die Summe aller Molenbrüche $a_1$ bis $a_i$ steht;

$$\sum_j c$$

für die Summe aller Molenbrüche $c_1$ bis $c_j$ steht; und

$$\sum_k e$$

für die Summe aller Molenbrüche $e_1$ bis $e_k$ steht. k

In den erfindungsgemäß eingesetzten Polymeren können die Monomeren M1, M2, M3, M4 und M5 in folgenden molaren Anteilen (Mx/(M1+M2+M3+M4+M5)) im Polymer enthalten sein:

M1: vorzugsweise 0,60 bis 0,97;
M2: vorzugsweise 0,02 bis 0,25;
M3: vorzugsweise 0,01 bis 0,15
M4: vorzugsweise 0 bis 0,10
M5: vorzugsweise 0 bis 0,02.

Für den Fall, dass die erfindungsgemäß eingesetzten Polymere die Monomere M4 und M5 nicht einpolymerisiert enthalten:

M1: vorzugsweise 0,60 bis 0,95, besonders bevorzugt 0,7 bis 0,93, insbesondere 0,8 bis 0,9;
M2: vorzugsweise 0,04 bis 0,25, besonders bevorzugt 0,06 bis 0,2, insbesondere 0,08 bis 0,15;
M3: vorzugsweise 0,01 bis 0,15, besonders bevorzugt 0,01 bis 0,1, insbesondere 0,02 bis 0,05.

Für den Fall, dass die erfindungsgemäß eingesetzten Polymere das Monomer M4 einpolymerisiert enthalten:

M1: vorzugsweise 0,60 bis 0,95, besonders bevorzugt 0,7 bis 0,93 insbesondere 0,8 bis 0,9;
M2: vorzugsweise 0,04 bis 0,25, besonders bevorzugt 0,05 bis 0,2, insbesondere 0,08 bis 0,15;
M3: vorzugsweise 0,008 bis 0,1, besonders bevorzugt 0,015 bis 0,08, insbesondere 0,015 bis 0,04;
M4: vorzugsweise 0,002 bis 0,05, besonders bevorzugt 0,005 bis 0,02, insbesondere 0,005 bis 0,01.

Für den Fall, dass die erfindungsgemäß eingesetzten Polymere das Monomer M5 einpolymerisiert enthalten:

M1: vorzugsweise 0,60 bis 0,95, besonders bevorzugt 0,7 bis 0,93 insbesondere 0,8 bis 0,9;
M2: vorzugsweise 0,04 bis 0,25, besonders bevorzugt 0,05 bis 0,2, insbesondere 0,08 bis 0,15;
M3: vorzugsweise 0,009 bis 0,13, besonders bevorzugt 0,015 bis 0,08, insbesondere 0,015 bis 0,04;
M5: vorzugsweise 0,001 bis 0,02, besonders bevorzugt 0,005 bis 0,02, insbesondere 0,005 bis 0,01.

Für den Fall, dass die erfindungsgemäß eingesetzten Polymere das sowohl das Monomer M4 als auch das Monomer M5 einpolymerisiert enthalten:

M1: vorzugsweise 0,60 bis 0,95, besonders bevorzugt 0,7 bis 0,93 insbesondere 0,8 bis 0,9;
M2: vorzugsweise 0,04 bis 0,25, besonders bevorzugt 0,05 bis 0,2, insbesondere 0,08 bis 0,15;
M3: vorzugsweise 0,008 bis 0,1, besonders bevorzugt 0,015 bis 0,08, insbesondere 0,015 bis 0,04;
M4: vorzugsweise 0,001 bis 0,025, besonders bevorzugt 0,0025 bis 0,01, insbesondere 0,0025 bis 0,005;
M5: vorzugsweise 0,001 bis 0,025, besonders bevorzugt 0,0025 bis 0,01, insbesondere 0,0025 bis 0,005.

Vorzugsweise ist M2 in einem größeren molaren Anteil im Polymer enthalten als M3. Vorzugsweise beträgt

das Molverhältnis von einpolymerisiertem M2 zu einpolymerisiertem M3 wenigstens 2:1, z.B. 2:1 bis 10:1 oder vorzugsweise 2:1 bis 8:1 oder insbesondere 2:1 bis 7:1; besonders bevorzugt wenigstens 2,5:1, z.B. 2,5:1 bis 10:1 oder vorzugsweise 2,5:1 bis 8:1 oder insbesondere 2,5:1 bis 7:1; und insbesondere 2,5:1 bis 6:1.

Das Molverhältnis von M3 zu M4 wird für den Fall, dass kein M5 im Copolymer enthalten ist, vor allem von der Kettenlänge der Reste $R^9$ und $R^{13}$ in Zusammenhang mit der erfindungsgemäßen Maßgabe (durchschnittliche Anzahl der Kohlenstoffatome in allen Resten $R^9$ und $R^{13}$ = 8,5 bis 20) bestimmt. Das Monomer M4 wird vorzugsweise in Polymer B und vorzugsweise vor allem dann eingesetzt, wenn im Polymer B die durchschnittliche Anzahl der Kohlenstoffatome in allen Resten $R^9$ kleiner 8,5 und insbesondere kleiner 9 ist; das Monomer M4 dient dann vorzugsweise dazu, die zu geringe Anzahl der Kohlenstoffatome in den Resten $R^9$ auszugleichen. Dementsprechend muss in diesem Fall $R^{13}$ je nach Stoffmengenanteil, in dem M4 einpolymerisiert ist, wenigstens 9 (d.h. 9 bis 20) Kohlenstoffatome enthalten (d.h. $R^{14}$ = $C_8$-$C_{19}$-Alkyl). In diesem Fall beträgt das Molverhältnis von M3 zu M4 vorzugsweise 1:1 bis 8:1, besonders bevorzugt 1,5:1 bis 6:1 und insbesondere 1,5:1 bis 5:1.

Wenn die durchschnittliche Anzahl der Kohlenstoffatome in allen Resten $R^9$ im Polymer B kleiner 8,5 und insbesondere kleiner 9 ist, kann alternativ oder zusätzlich zum Monomer M4 auch das Monomer M5 zum Ausgleich der Kohlenstoffanzahl dienen. Es versteht sich von selbst, dass in diesem Fall die durchschnittliche Anzahl aller Kohlenstoffatome in den Resten $R^{19}$ und $R^{21}$ in Abhängigkeit vom Stoffmengenanteil, in dem M5 einpolymerisiert ist, so groß sein muss, dass die erfindungsgemäße Maßgabe erfüllt ist.

Unabhängig davon ist jedoch M5 vorzugsweise in nur untergeordneten Mengen im Polymer enthalten, z.B. in höchstens 2 Mol-%, besonders bevorzugt höchstens 1 Mol-%.

In einer speziellen Ausführungsform der Erfindung enthält das Polymer kein einpolymerisiertes M5.

Bei den Monomeren M1 handelt es sich vorzugsweise um Monoalkene mit terminaler Doppelbindung, wie Ethylen, Propylen, 1-Buten, 1-Penten, 1-Hexen, 1-Hepten, 1-Octen, 1-Nonen, 1-Decen, deren Konstitutionsisomere sowie die höheren einfach ungesättigten Homologen mit bis zu 40 Kohlenstoffatomen.

In den Monomeren M1 steht $R^1$ vorzugsweise für H oder $C_1$-$C_{20}$-Alkyl, besonders bevorzugt für H oder $C_1$-$C_{10}$-Alkyl und stärker bevorzugt für H oder $C_1$-$C_4$-Alkyl. Insbesondere steht $R^1$ für H, Methyl oder Ethyl. Dementsprechend handelt es sich bei Monomer M1 insbesondere um Ethylen, Propylen oder 1-Buten. Speziell steht $R^1$ für H, d.h. M1 steht speziell für Ethylen.

Beim Monomeren M2 handelt es sich um den Alkenylester, z.B. um den Vinyl- oder Propenylester, vorzugsweise um den Vinylester, einer aliphatischen Carbonsäure, die ungesättigt oder vorzugsweise gesättigt sein kann.

Im Monomer M2 stehen die Reste $R^2$, $R^3$ und $R^4$ vorzugsweise für H oder Methyl. Besonders bevorzugt stehen zwei der Reste $R^2$, $R^3$ und $R^4$ für H und der andere Rest steht für H oder Methyl. Insbesondere stehen alle drei Reste $R^2$, $R^3$ und $R^4$ für H.

Beispiele für die Alkenylester, insbesondere für die Vinyl- oder Propenylester einer aliphatischen Carbonsäure, die ungesättigt oder vorzugsweise gesättigt sein kann, sind die Vinyl- oder Propenylester von aliphatischen $C_2$-$C_{20}$-Carbonsäuren, wie Essigsäure, Propionsäure, Buttersäure, Valeriansäure, Isovaleriansäure, Pivalinsäure, Neopentansäure, Capronsäure, Önanthsäure, Caprylsäure, Pelargonsäure, 2-Ethylhexansäure, Versatinsäuren (Versatic™ acid), insbesondere Neononansäure und Neodecansäure (z.B. VeoVa™ = Vinylester von Versatinsäure), Caprinsäure, Neoundecansäure, Laurinsäure, Tridecansäure, Myristinsäure, Pentadecansäure, Palmitinsäure, Margarinsäure, Stearinsäure, Nonadecansäure und Arachinsäure. Bevorzugt sind die Vinylester der genannten Carbonsäuren.

$R^5$ steht vorzugsweise für $C_1$-$C_9$-Alkyl. Dementsprechend sind bevorzugte Monomere M2 die Alkenylester, vor allem die Propenyl- und insbesondere die Vinylester, von gesättigten aliphatischen $C_2$-$C_{10}$-Carbonsäuren, wie Essigsäure, Propionsäure, Buttersäure, Valeriansäure, Isovaleriansäure, Pivalinsäure, Neopentansäure, Capronsäure, Önanthsäure, Caprylsäure, Pelargonsäure, 2-Ethylhexansäure, Versatinsäuren (Versatic™ acid), insbesondere Neononansäure und Neodecansäure (z.B. VeoVa™ = Vinylester von Versatinsäure) und Caprinsäure.

Besonders bevorzugt steht $R^5$ für $C_1$-$C_3$-Alkyl. Dementsprechend sind bevorzugte Monomere M2 die Alkenylester, vor allem die Propenyl- und insbesondere die Vinylester, von gesättigten aliphatischen $C_2$-$C_4$-Carbonsäuren, wie Essigsäure, Propionsäure und Buttersäure. Stärker bevorzugt steht $R^5$ für Ethyl oder Methyl und insbesondere für Methyl. Dementsprechend sind stärker bevorzugte Monomere M2 die Alkenylester, vor allem die Propenyl- und insbesondere die Vinylester, von Essigsäure oder Propionsäure und insbesondere von Essigsäure.

Besonders bevorzugt handelt es sich bei dem Monomer M2 um Vinylacetat oder Vinyl-propionat und insbesondere um Vinylacetat.

Im Monomer M3 stehen die Reste $R^6$, $R^7$ und $R^8$ vorzugsweise für H oder Methyl. Besonders bevorzugt stehen zwei der Reste $R^6$, $R^7$ und $R^8$ für H und der andere Rest steht für H oder Methyl. Insbesondere stehen alle drei Reste $R^6$, $R^7$ und $R^8$ für H.

Dementsprechend handelt es sich beim Monomer M3 vorzugsweise um die Ester von $\alpha,\beta$-ungesättigten Carbonsäuren, die ausgewählt sind unter Acrylsäure ($R^6$, $R^7$ und $R^8$ = H), Methacrylsäure ($R^6$, $R^7$ = H; $R^8$ = Methyl), Crotonsäure ($R^7$, $R^8$ = H; $R^6$ = Methyl) und Isocrotonsäure ($R^6$, $R^8$ = H; $R^7$ = Methyl), besonders bevorzugt unter Acrylsäure und Methacrylsäure und insbesondere Acrylsäure.

Als Beispiele für dergleichen bevorzugte $\alpha,\beta$-ungesättigte Carbonsäureester M3 im Polymer B sind zu nennen:

Erstes Monomer M3, worin $R^9$ für $C_4$-$C_{20}$-Alkyl steht: Acrylsäureester von $C_4$-$C_{20}$-Alkanolen, wie Acrylsäure-n-butylester, Acrylsäure-sec-butylester, Acrylsäureisobutylester, Acrylsäuretert-butylester, Acrylsäure-n-pentylester, Acrylsäureneopentylester, Acrylsäureisopentylester, Acrylsäurehexylester, Acrylsäureheptylester, Acrylsäureoctylester, Acrylsäure-2-ethylhex-1-ylester, Acrylsäurenonylester, Acrylsäuredecylester, Acrylsäure-2-propylhept-1-ylester, Acrylsäure-4-methyl-2-propylhex-1-ylester, Acrylsäureundecylester, Acrylsäurelaurylester, Acrylsäuretridecylester, Acrylsäuremyristylester, Acrylsäurepalmitylester, Acrylsäurestearylester, Acrylsäurenonadecylester und Acrylsäureeicosylester; außerdem die entsprechenden Methacrylsäure-, Crotonsäure- und Isocrotonsäureester, wobei die Acrylate (Acrylsäureester) bevorzugt sind.

Zweites und jedes weitere Monomer M3, worin $R^9$ für $C_9$-$C_{20}$-Alkyl steht: Acrylsäureester von $C_9$-$C_{20}$-Alkanolen, wie Acrylsäurenonylester, Acrylsäuredecylester, Acrylsäure-2-propylhept-1-ylester, Acrylsäure-4-methyl-2-propylhex-1-ylester, Acrylsäureundecylester, Acrylsäurelaurylester, Acrylsäuretridecylester, Acrylsäuremyristylester, Acrylsäurepalmitylester, Acrylsäurestearylester, Acrylsäurenonadecylester und Acrylsäureeicosylester; außerdem die entsprechenden Methacrylsäure-, Crotonsäure- und Isocrotonsäureester, wobei die Acrylate (Acrylsäureester) bevorzugt sind.

$R^9$ steht im ersten Monomer M3 des Polymers B für $C_4$-$C_{20}$-Alkyl, vorzugsweise für $C_6$-$C_{20}$-Alkyl, z.B. $C_6$-$C_{18}$-Alkyl oder vorzugsweise $C_6$-$C_{16}$-Alkyl oder besonders bevorzugt $C_6$-$C_{14}$-Alkyl oder insbesondere $C_6$-$C_{12}$-Alkyl, und besonders bevorzugt für $C_8$-$C_{20}$-Alkyl, z.B. $C_8$-$C_{18}$-Alkyl oder vorzugsweise $C_8$-$C_{16}$-Alkyl oder besonders bevorzugt $C_8$-$C_{14}$-Alkyl oder insbesondere $C_8$-$C_{12}$-Alkyl. Speziell steht $R^9$ für $C_8$-$C_{12}$-Alkyl.

$R^9$ steht im zweiten und in jedem weiteren Monomer M3 des Polymers B für $C_9$-$C_{20}$-Alkyl, z.B. $C_9$-$C_{18}$-Alkyl oder vorzugsweise $C_9$-$C_{16}$-Alkyl oder besonders bevorzugt $C_9$-$C_{14}$-Alkyl oder insbesondere $C_9$-$C_{12}$-Alkyl; und besonders bevorzugt für $C_{10}$-$C_{20}$-Alkyl, z.B. $C_{10}$-$C_{18}$-Alkyl oder vorzugsweise $C_{10}$-$C_{16}$-Alkyl oder besonders bevorzugt $C_{10}$-$C_{14}$-Alkyl oder insbesondere $C_{10}$-$C_{12}$-Alkyl. Speziell steht $R^9$ für $C_{10}$-$C_{12}$-Alkyl.

Das Polymer B enthält wenigstens zwei verschiedene Monomere M3 in einpolymerisierter Form. Dabei ist es bevorzugt, dass in einem ersten Monomer M3 $R^9$ für $C_6$-$C_{20}$-Alkyl steht und im zweiten und jedem weiteren Monomer M3 $R^9$ für $C_9$-$C_{20}$-Alkyl steht. Erfindungsgemäß unterscheiden sich die verschiedenen Monomere M3 durch die Reste $R^9$ und gegebenenfalls auch durch die Reste $R^6$, $R^7$ und $R^8$. Besonders bevorzugt unterscheiden sich die verschiedenen Monomere M3 jedoch ausschließlich durch die Reste $R^9$. Die unterschiedlichen Reste $R^9$ können sich durch die Anzahl der Kohlenstoffatome und/oder durch ihre Konstitution unterscheiden. Insbesondere sind alle Monomere M3 Acrylsäureester (d.h. $R^6$, $R^7$ und $R^8$ stehen für H), die sich formal von verschiedenen Alkoholen $R^9OH$ ableiten.

In bevorzugten Monomeren M3 des Polymers B gilt die Maßgabe, dass die durchschnittliche Anzahl der Kohlenstoffatome aller Reste $R^9$ 8,5 bis 20, z.B. 8,5 bis 18 oder 8,5 bis 16 oder 8,5 bis 14 oder 8,5 bis 12, und vorzugsweise 9 bis 20, z.B. 9 bis 18 oder 9 bis 16 oder 9 bis 14 oder 9 bis 12, beträgt.

Erfindungsgemäß steht in wenigstens einem Monomer M3 des Polymers B der Rest $R^9$ für verzweigtes Alkyl. Das Molverhältnis von einpolymerisierten Monomeren M3 mit verzweigtem Alkylrest $R^9$ zu einpolymerisierten Monomeren M3 mit linearem Alkylrest $R^9$ beträgt 1:5 bis 1:0.

In einer besonders bevorzugten Ausgestaltung des Polymers B steht in einem der Monomere M3 $R^9$ für 2-Propylheptyl. Besonders bevorzugt handelt es sich bei diesem einen Monomer M3 um 2-Propylheptylacrylat.

In einer weiteren bevorzugten Ausgestaltung des Polymers B stehen die Reste $R^9$ aller einpolymerisierten Monomere M3 für $C_9$-$C_{20}$-Alkyl, vor allem für $C_{10}$-$C_{20}$-Alkyl, vorzugsweise für $C_9$-$C_{18}$-Alkyl, vor allem für $C_{10}$-$C_{18}$-Alkyl, besonders bevorzugt für $C_9$-$C_{16}$-Alkyl, vor allem für $C_{10}$-$C_{16}$-Alkyl, stärker bevorzugt für $C_9$-$C_{14}$-Alkyl, vor allem für $C_{10}$-$C_{14}$-Alkyl, und insbesondere für $C_9$-$C_{12}$-Alkyl, vor allem für $C_{10}$-$C_{12}$-Alkyl. Bevorzugt steht in einem dieser Monomere M3 $R^9$ für 2-Propylheptyl. Besonders bevorzugt handelt es sich bei diesem einen Monomer M3 um 2-Propylheptylacrylat. Bevorzugt steht in einem zweiten Monomer M3 der Rest $R^9$ für ein von 2-Propylheptyl verschiedenes Decylisomer, insbesondere für 4-Methyl-2-propylhexyl. Bevorzugt ist dabei das Monomer M3, das als $R^9$ 2-Propylheptyl enthält, in einem größeren molaren Anteil einpolymerisiert als das Monomer M3, das als $R^9$ ein davon verschiedenes Decylisomer enthält. Bevorzugt beträgt das Molverhältnis von 2-Propylheptylester zum davon verschiedenen Decylisomerester 20:1 bis 1,5:1, besonders bevorzugt 10:1 bis 4:1. Bevorzugt handelt es sich bei dem zweiten Monomer M3 um ein Decylacrylat, insbesondere um 4-Methyl-2-propylhexylacrylat.

In einer alternativ bevorzugten Ausgestaltung des Polymers B steht in einem der Monomere M3 der Rest $R^9$ für $C_6$-$C_8$-Alkyl, vorzugsweise für $C_7$-$C_8$-Alkyl, insbesondere für $C_8$-Alkyl und speziell für 2-Ethylhexyl, während in den übrigen Monomeren M3 $R^9$ für $C_9$-$C_{20}$-Alkyl, vor allem für $C_{10}$-$C_{20}$-Alkyl, vorzugsweise für $C_9$-$C_{18}$-Alkyl, vor allem für $C_{10}$-$C_{18}$-Alkyl, besonders bevorzugt für $C_9$-$C_{16}$-Alkyl, vor allem für $C_{10}$-$C_{16}$-Alkyl, stärker bevorzugt für $C_9$-$C_{14}$-Alkyl, vor allem für $C_{10}$-$C_{14}$-Alkyl, und insbesondere für $C_9$-$C_{12}$-Alkyl, vor allem für $C_{10}$-$C_{12}$-Alkyl, steht. Insbesondere steht in diesen weiteren Monomeren M3 $R^9$ für 2-Propylheptyl, 4-Methyl-2-propylhexyl, Lauryl und/oder Myristyl. Besonders bevorzugt handelt es sich bei allen Monomeren M3 um Acrylate.

In einer weiteren alternativ bevorzugten Ausgestaltung des Polymers B enthält dieses zwei Monomere M3 der

Formeln M3.1 und M3.2 und gegebenenfalls wenigstens ein weiteres Monomer M3 der Formel M3.3:

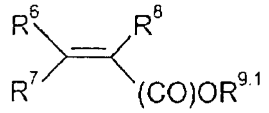
M3.1

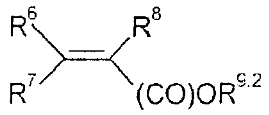
M3.2

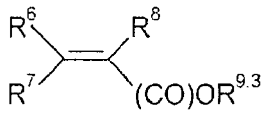
M3.3

worin jedes $R^6$, jedes $R^7$ und jedes $R^8$ unabhängig eine der oben angegebenen allgemeinen oder bevorzugten Bedeutungen besitzt;
$R^{9.1}$ für $C_6$-$C_{20}$-Alkyl steht;
$R^{9.2}$ für $C_9$-$C_{20}$-Alkyl steht; und
jedes $R^{9.3}$ unabhängig für $C_9$-$C_{20}$-Alkyl steht;
mit der Maßgabe, dass die durchschnittliche Anzahl der Kohlenstoffatome der Reste $R^{9.1}$, $R^{9.2}$ und $R^{9.3}$ 9 bis 20 beträgt und dass $R^{9.1}$, $R^{9.2}$ und $R^{9.3}$ verschieden sind.

In einer besonders bevorzugten Ausgestaltung dieser Ausführungsform stehen die Reste $R^{9.1}$, $R^{9.2}$ und $R^{9.3}$ alle für $C_9$-$C_{20}$-Alkyl, vor allem für $C_{10}$-$C_{20}$-Alkyl, vorzugsweise für $C_9$-$C_{18}$-Alkyl, vor allem für $C_{10}$-$C_{18}$-Alkyl, besonders bevorzugt für $C_9$-$C_{16}$-Alkyl, vor allem für $C_{10}$-$C_{16}$-Alkyl, stärker bevorzugt für $C_9$-$C_{14}$-Alkyl, vor allem für $C_{10}$-$C_{14}$-Alkyl, und insbesondere für $C_9$-$C_{12}$-Alkyl, vor allem für $C_{10}$-$C_{12}$-Alkyl. Bevorzugt steht der Rest $R^{9.1}$ für 2-Propylheptyl. Bevorzugt steht im $R^{9.2}$ für ein von 2-Propylheptyl verschiedenes Decylisomer, insbesondere für 4-Methyl-2-propylhexyl. Bevorzugt ist dabei M3.1 in einem größeren molaren Anteil einpolymerisiert als M3.2. Bevorzugt beträgt das Molverhältnis von M3.1 zu M3.2 20:1 bis 1,5:1, besonders bevorzugt 10:1 bis 4:1. Bevorzugt handelt es sich bei den Monomeren M3.1, M3.2 und M3.3 um Acrylate (d.h. $R^6$, $R^7$, $R^8$ = H).

In einer alternativ bevorzugten Ausgestaltung dieser Ausführungsform steht der Rest $R^{9.1}$ für $C_6$-$C_8$-Alkyl, vorzugsweise für $C_7$-$C_8$-Alkyl, insbesondere für $C_8$-Alkyl und speziell für 2-Ethylhexyl, während in den übrigen Monomeren M3.2 und M3.3 die Reste $R^{9.2}$ und $R^{9.3}$ für $C_9$-$C_{20}$-Alkyl, vor allem für $C_{10}$-$C_{20}$-Alkyl, vorzugsweise für $C_9$-$C_{18}$-Alkyl, vor allem für $C_{10}$-$C_{18}$-Alkyl, besonders bevorzugt für $C_9$-$C_{16}$-Alkyl, vor allem für $C_{10}$-$C_{16}$-Alkyl, stärker bevorzugt für $C_9$-$C_{14}$-Alkyl und insbesondere für $C_{10}$-$C_{14}$-Alkyl stehen. Speziell steht dabei $R^{9.2}$ für 2-Propylheptyl und $R^{9.3}$ steht für ein davon verschiedenes Decylisomer, insbesondere für 4-Methyl-2-propylhexyl, oder $R^{9.2}$ steht für Lauryl und $R^{9.3}$ steht für Myristyl. Bei den Monomeren M3.1, M3.2 und M3.3 handelt es sich vorzugsweise um Acrylate (d.h. $R^6$, $R^7$, $R^8$ = H).

In einer speziellen Ausführungsform enthält das Polymer wenigstens ein Monomer M3.3 und noch spezieller ein Monomer M3.3 in einpolymerisierter Form.

Für den Fall, dass die durchschnittliche Anzahl der Kohlenstoffatome aller Reste $R^9$ in den Monomeren M3 im Polymer B 8,5 bis 20 und vorzugsweise 9 bis 20 beträgt, braucht das Polymer B keine Monomere M4 und M5 einpolymerisiert zu enthalten. Beim Monomeren M4 handelt es sich, wie auch beim Monomeren M2, um den Alkenylester, z.B. um den Vinyl- oder Propenylester, vorzugsweise um den Vinylester, einer aliphatischen Carbonsäure, die ungesättigt oder vorzugsweise gesättigt sein kann.

Im Monomer M4 stehen die Reste $R^{10}$, $R^{11}$ und $R^{12}$ vorzugsweise für H oder Methyl. Besonders bevorzugt stehen zwei der Reste $R^{10}$, $R^{11}$ und $R^{12}$ für H und der andere Rest steht für H oder Methyl. Insbesondere stehen alle drei Reste $R^{10}$, $R^{11}$ und $R^{12}$ für H.

Beispiele für die Alkenylester, insbesondere für die Vinyl- oder Propenylester einer aliphatischen Carbonsäure, die ungesättigt oder vorzugsweise gesättigt sein kann, sind die Vinyl- oder Propenylester von aliphatischen $C_4$-$C_{20}$-Carbonsäuren, wie Buttersäure, Valeriansäure, Isovaleriansäure, Pivalinsäure, Neopentansäure, Capronsäure, Önanthsäure, Caprylsäure, 2-Ethylhexansäure, Pelargonsäure, Versatinsäuren (Versatic™ acid), insbesondere Neononansäure und Neodecansäure (z.B. VeoVa™ = Vinylester von Versatinsäure), Caprinsäure, Undecansäure, Neoundecansäure, Laurinsäure, Tridecansäure, Myristinsäure, Pentadecansäure, Palmitinsäure, Margarinsäure, Stearinsäure, Nonadecansäure und Arachinsäure. Bevorzugt sind die Vinylester der genannten Carbonsäuren.

In den erfindungsgemäß eingesetzten Polymeren gilt die Maßgabe, dass $R^5$ und $R^{14}$ verschieden sind. Der

Unterschied kann in der unterschiedlichen Anzahl an Kohlenstoffatomen in den Alkylresten $R^5$ und $R^{14}$ und/oder in deren Konstitution liegen. Vorzugsweise unterscheiden sich $R^5$ und $R^{14}$ zumindest durch die Anzahl ihrer Kohlenstoffatome. Vorzugsweise ist $R^{14}$ längerkettiger als $R^5$. Besonders bevorzugt enthält $R^{14}$ wenigstens 5 Kohlenstoffatome, stärker bevorzugt wenigstens 8 Kohlenstoffatome und insbesondere wenigstens 10 Kohlenstoffatome mehr als $R^5$.

$R^{14}$ steht vorzugsweise für $C_9$-$C_{15}$-Alkyl. Dementsprechend sind bevorzugte Monomere M4 die Alkenylester, vor allem die Propenyl- und insbesondere die Vinylester, von gesättigten aliphatischen $C_{10}$-$C_{16}$-Carbonsäuren, wie Caprinsäure, Undecansäure, Neoundecansäure, Laurinsäure, Tridecansäure, Myristinsäure, Pentadecansäure und Palmitinsäure. Besonders bevorzugt steht $R^{14}$ für $C_9$-$C_{13}$-Alkyl. Dementsprechend sind bevorzugte Monomere M4 die Alkenylester, vor allem die Propenyl- und insbesondere die Vinylester, von gesättigten aliphatischen $C_{10}$-$C_{14}$-Carbonsäuren, wie Caprinsäure, Undecansäure, Neoundecansäure, Laurinsäure, Tridecansäure und Myristinsäure. Stärker bevorzugt steht $R^{14}$ für $C_{11}$-$C_{13}$-Alkyl und speziell für $C_{11}$-Alkyl oder $C_{13}$-Alkyl. Dementsprechend sind bevorzugte Monomere M4 die Alkenylester, vor allem die Propenyl- und insbesondere die Vinylester, von gesättigten aliphatischen $C_{12}$-$C_{14}$-Carbonsäuren, wie Laurinsäure, Tridecansäure und Myristinsäure und speziell Laurinsäure und Myristinsäure.

Insbesondere steht M4 für Vinyllaurat oder Vinylmyristat und noch spezieller für Vinyllaurat.

Beim Monomeren M5 handelt es sich um das Säureanhydrid einer ethylenisch ungesättigten aliphatischen 1,2-Dicarbonsäure ($R^{17}$ und $R^{20}$ bilden gemeinsam eine Gruppe - O-), um eine ethylenisch ungesättigte aliphatische 1,2-Dicarbonsäure ($R^{17}$ und $R^{21}$ = H), um den Monoester einer ethylenisch ungesättigten aliphatischen 1,2-Dicarbonsäure von $C_1$-$C_{20}$-Alkoholen ($R^{19}$ oder $R^{21}$ = H und der andere Rest steht für $C_1$-$C_{20}$-Alkyl) oder um den Diester einer ethylenisch ungesättigten aliphatischen 1,2-Dicarbonsäure von $C_1$-$C_{20}$-Alkoholen ($R^{19}$ und $R^{21}$ = $C_1$-$C_{20}$-Alkyl).

Vorzugsweise stehen $R^{15}$ und $R^{16}$ bzw. $R^{18}$ für H. Dementsprechend handelt es sich bei M5 vorzugsweise um Maleinsäureanhydrid, Maleinsäure, Fumarsäure, einen Maleinsäuremono- oder -diester oder einen Fumarsäuremono- oder -diester von $C_1$-$C_{20}$-Alkoholen.

Beispiele für Fumarsäure- und Maleinsäuremono- und -diester sind die Fumarsäure- und Maleinsäuremonomethyl-, -ethyl-, -propyl-, -isopropyl-, -n-butyl-, -sec-butyl-, -isobutyl-, -tert-butyl-, -pentyl-, -hexyl-, -heptyl-, -octyl-, -2-ethylhexyl-, -nonyl-, -decyl-, -2-propylheptyl-, -4-methyl-2-propylhexyl-, -undecyl-, -dodecyl-, -tridecyl-, -tetradecyl-, -pentadecyl-, -hexadecyl-, -heptadecyl-, -octadecyl-, -nonadecyl-, -eicosylester sowie die symmetrischen und gemischten Fumarsäure- und Maleinsäurediester der entsprechenden Alkohole.

In einer Ausführungsform der Erfindung enthält das Polymer B wenigstens ein Monomer M4 in einpolymerisierter Form. Vorzugsweise steht dabei $R^{14}$ für $C_9$-$C_{19}$-Alkyl. Auf die oben gemachten Angaben zu stärker bevorzugten Monomeren M4 wird Bezug genommen. In diesem Fall steht $R^9$ in dem wenigstens einen Monomer M3 in Polymer B vorzugsweise für $C_6$-$C_{16}$-Alkyl, besonders bevorzugt für $C_6$-$C_{14}$-Alkyl, stärker bevorzugt für $C_6$-$C_{12}$-Alkyl, noch stärker bevorzugt für $C_6$-$C_{10}$-Alkyl, insbesondere für $C_6$-$C_8$-Alkyl, speziell für $C_8$-Alkyl und noch spezieller für 2-Ethylhexyl.

Besonders bevorzugt verwendete Polymere B sind ausgewählt unter Ethylen / Vinylacetat / 2-Propylheptylacrylat-Copolymeren, Ethylen / Vinylacetat / 2-Propylheptylacrylat / 4-Methyl-2-propylhexylacrylat-Copolymeren, Ethylen / Vinylacetat / 2-Ethylhexylacrylat / 2-Propylheptylacrylat-Copolymeren, Ethylen / Vinylacetat / 2-Ethylhexylacrylat / 2-Propylheptylacrylat / 4-Methyl-2-propylhexylacrylat-Copolymeren, Ethylen / Vinylacetat / 2-Ethylhexylacrylat / Laurylacrylat-Copolymeren, Ethylen / Vinylacetat / 2-Ethylhexylacrylat / Laurylacrylat / Myristylacrylat-Copolymeren, Ethylen / Vinylacetat / 2-Ethylhexylacrylat / Vinyllaurat-Copolymeren und Ethylen / Vinylacetat / 2-Ethylhexylacrylat / 2-Propylheptylacrylat / 4-Methyl-2-propylhexylacrylat / Laurylacrylat / Myristylacrylat-Copolymeren. Besonders bevorzugt sind hierunter die quaternären Copolymere, d.h. solche, die im Wesentlichen aus vier verschiedenen Monomeren aufgebaut sind. Noch stärker bevorzugt sind hierunter die quaternären Copolymere, die 2-Propylheptylacrylat einpolymerisiert enthalten.

Die erfindungsgemäß eingesetzten Polymere weisen vorzugsweise ein zahlenmittleres Molekulargewicht $M_n$ im Bereich von etwa 1000 bis 20000, besonders bevorzugt von 1000 bis 10000, insbesondere von 1500 bis 6000 und speziell von 2000 bis 4000 g/mol auf.

Die Polymere weisen vorzugsweise ein gewichtsmittleres Molekulargewicht $M_w$ von 1500 bis 30000, besonders bevorzugt von 2000 bis 20000, insbesondere von 3000 bis 15000, speziell von 4000 bis 14000 und/oder ein $M_w/M_n$-Verhältnis von 1,5 bis 5,0, vorzugsweise von 1,8 bis 4,0 und insbesondere von 1,9 bis 3,5 auf.

Die im Rahmen der vorliegenden Erfindung gemachten Angaben zu gewichtsmittleren und zahlenmittleren Molekulargewichten $M_w$ und $M_n$ und ihrem Quotienten PDI (PDI = $M_w/M_n$) beziehen sich auf Werte, die mittels Gelpermeationschromatographie (Polyisobuten-Standards) bestimmt wurden.

Die Viskosität derartiger Polymere (bestimmt nach Ubbelohde DIN 51562) liegt bei etwa 5 bis 25000 $mm^2/s$, vorzugsweise etwa 10 bis 1000 $mm^2/s$, insbesondere etwa 50 bis 700 $mm^2/s$ jeweils bei einer Temperatur von 120 °C.

b) Erfindungsgemäße Polymere

Ein weiterer Gegenstand der Erfindung betrifft Polymere B, die wie oben definiert sind. Die obigen Ausführungen zu geeigneten und bevorzugten Monomeren M1, M2, M3, M4 und M5 und zur geeigneten und bevorzugten Zusammensetzung der Polymere gelten hier entsprechend. Die erfindungsgemäßen Polymere sind keine Pfropfcopolymere.

Die erfindungsgemäß verwendeten Polymere bzw. die erfindungsgemäßen Polymere sind vorzugsweise im Wesentlichen aus den oben definierten Monomeren M1, M2, M3, gegebenenfalls M4 und gegebenenfalls M5 aufgebaut. "Im Wesentlichen" bedeutet, dass die Polymere höchstens 5 Gew.-%, vorzugsweise höchstens 3 Gew.-%, besonders bevorzugt höchstens 2 Gew.-% und insbesondere höchstens 1 Gew.-%, bezogen auf das Gesamtgewicht des Polymers, von M1, M2, M3, M4 und M5 verschiedene Komponenten enthalten. So können herstellungsbedingt gegebenenfalls geringe Anteile einer als Regler (Ketten-Terminator) eingesetzten Verbindung enthalten sein.

c) Herstellung der Polymere

Die erfindungsgemäßen bzw. erfindungsgemäß verwendeten Polymere werden nach an sich bekannten Verfahren hergestellt, vorzugsweise nach den aus dem Stand der Technik (vgl. z.B. Ullmann's Encyclopedia of Industrial Chemistry5. Auflage, Stichwort: Waxes, Bd. A 28, S. 146 ff., VCH Weinheim, Basel, Cambridge, New York, Tokio, 1996; außerdem EP-A-157106, EP-A-244855, EP-A-0007590, US 6,300,430, US 3,627,838, DE-A-2515805, DE-A-3141507) bekannten Verfahren zur direkten radikalischen Hochdruck-Copolymerisation ungesättigter Verbindungen.

Die Herstellung der Polymere erfolgt bevorzugt in gerührten Hochdruckautoklaven oder stärker bevorzugt in Hochdruckrohrreaktoren oder Kombinationen aus beiden. Bei den Autoklaven verhält sich überwiegend das Verhältnis Länge/Durchmesser in Bereichen von 2:1 bis 30:1, bevorzugt 5:1 bis 20:1. Die Rohrreaktoren haben überwiegend ein Länge/Durchmesser-Verhältnis von >1000, bevorzugt von 5000 bis 30000.

Geeignete Druckbedingungen für die Polymerisation sind 1000 bis 3000 bar, bevorzugt 1500 bis 2000 bar. Die Reaktionstemperaturen liegen z.B. im Bereich von 120 bis 320 °C, bevorzugt im Bereich von 140 bis 280 °C, besonders bevorzugt im Bereich von 140 bis 250 °C.

Als Regler zur Einstellung des Molekulargewichts der Copolymere verwendet man beispielsweise einen aliphatischen Aldehyd oder ein aliphatisches Keton der allgemeinen Formel I

(I) 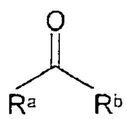

oder Mischungen derselben.

Dabei sind die Reste $R^a$ und $R^b$ gleich oder verschieden und ausgewählt unter

- Wasserstoff;
- $C_1$-$C_6$-Alkyl, wie Methyl, Ethyl, n-Propyl, iso-Propyl, n-Butyl, iso-Butyl, sec.-Butyl, tert.-Butyl, n-Pentyl, iso-Pentyl, sec-Pentyl, neo-Pentyl, 1,2-Dimethylpropyl, isoAmyl, n-Hexyl, iso-Hexyl, sec-Hexyl; besonders bevorzugt $C_1$-$C_4$-Alkyl, wie Methyl, Ethyl, n-Propyl, iso-Propyl, n-Butyl, iso-Butyl, sec-Butyl und tert.-Butyl;
- $C_3$-$C_{12}$-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Die Reste $R^a$ und $R^b$ können auch miteinander unter Bildung eines 4- bis 13-gliedrigen Rings kovalent verbunden sein. So können $R^a$ und $R^b$ beispielsweise gemeinsam folgende Alkylengruppen bilden: $-(CH_2)_4-$, $-(CH_2)_5-$, $-(CH_2)_6$, $-(CH_2)_7-$, $-CH(CH_3)-CH_2-CH_2-CH(CH_3)-$ oder $-CH(CH_3)-CH_2-CH_2-CH_2-CH(CH_3)-$.

Die Verwendung von Propionaldehyd oder Ethylmethylketon als Regler ist ganz besonders bevorzugt.

Weitere gut geeignete Regler sind unverzweigte aliphatische Kohlenwasserstoffe, wie beispielsweise Propan oder verzweigte aliphatische Kohlenwasserstoffe mit tertiären H-Atomen, wie beispielsweise Isobutan, Isopentan, Isooctan oder Isododekan (2,2,4,6,6-Pentamethylheptan). Als weitere zusätzliche Regler können höhere Olefine, wie beispielsweise Propylen, eingesetzt werden.

Auch Mischungen der obigen Regler mit Wasserstoff oder Wasserstoff alleine sind ebenfalls bevorzugt.

Die Menge an verwendetem Regler entspricht den für das Hochdruckpolymerisationsverfahren üblichen Mengen.

Als Starter für die radikalische Polymerisation können die üblichen Radikalstarter, wie beispielsweise organische Peroxide, Sauerstoff oder Azoverbindungen, eingesetzt werden. Auch Mischungen mehrerer Radikalstarter sind geeignet. Als Radikalstarter können z.B. ein oder mehrere Peroxide, ausgewählt unter folgenden kommerziell erhältlichen Substanzen eingesetzt werden:

- Didecanoylperoxid, 2,5-Dimethyl-2,5-di(2-ethylhexanoylperoxy)hexan, tert-Amylperoxy-2-ethylhexanoat, Dibenzoylperoxid, tert-Butylperoxy-2-ethylhexanoat, tert-Butylperoxydiethylacetat, tert-Butylperoxydiethylisobutyrat, 1,4-Di(tert-butylperoxycarbo)-cyclohexan als Isomerengemisch, tert-Butylperisononanoat, 1,1-Di-(tert-butylperoxy)-3,3,5-trimethylcyclohexan, 1,1-Di-(tert-butylperoxy)-cyclohexan, Methyl-isobutylketonperoxid, tert-Butylperoxyisopropylcarbonat, 2,2-Di-tert-butylperoxy)butan, tert-Butylperoxacetat, tert-Butylperoxypivalat oder tert-Amylperoxypivalat;

- tert-Butylperoxybenzoat, Di-tert-amylperoxid, Dicumylperoxid, die isomeren Di-(tert-butylperoxyisopropyl)benzole, 2,5-Dimethyl-2,5-di-tert-butylperoxyhexan, tert-Butylcumylperoxid, 2,5-Dimethyl-2,5-di(tert-butylperoxy)-hex-3-in, Di-tert-butylperoxid, 1,3-Diisopropylmonohydroperoxid, Cumolhydroperoxid odertert-Butylhydroperoxid; oder
- dimere oder trimere Ketonperoxide, so wie sie z.B. aus der EP-A-0 813 550 bekannt sind.

Als Peroxide sind Di-tert-butylperoxid, tert-Butylperoxypivalat, tert-Butylperoxyisononanoat oder tert-Butylperoxy-2-ethylhexanoat oder Gemische derselben besonders geeignet. Als Azoverbindung sei Azobisisobutyronitril "AIBN" beispielhaft genannt. Die Radikalstarter werden in für Polymerisationen üblichen Mengen dosiert.

In einer bevorzugten Fahrweise werden die erfindungsgemäßen Polymere so hergestellt, dass man die Monomeren M1, M2, M3, gegebenenfalls M4 und gegebenenfalls M5 einzeln oder im Gemisch in Gegenwart des Reglers bei einer Temperatur im Bereich von etwa 120 bis 160°C, wie z.B. von 140°C, vorzugsweise kontinuierlich durch einen Rohrreaktor leitet, welcher auf einem Druck im Bereich von etwa 1500 bis 2000 bar, wie z.B. von etwa 1700 bar, gehalten wird. Durch die kontinuierliche Zugabe von Initiator, der in der Regel in einem geeigneten Lösemittel, wie z.B. Isododecan, gelöst ist, wird die Temperatur im Reaktor auf der gewünschten Reaktionstemperatur, wie z.B. bei 200 bis 250°C als Maximalwert, gehalten. Das im Austrag enthaltene Polymerisat wird dann in herkömmlicher Weise isoliert oder gemeinsam mit nicht umgesetzten Edukten in den Reaktor zurückgeführt.

Abwandlungen dieser Fahrweise sind natürlich möglich und können vom Fachmann ohne unzumutbaren Aufwand vorgenommen werden. So können beispielsweise die Comonomere und der Regler getrennt dem Reaktionsgemisch zudosiert werden, die Reaktionstemperatur kann während des Verfahrens variiert werden, um nur einige Beispiele zu nennen.

d) Brennstoffölzusammensetzungen

Die Polymere werden als Kaltfließverbesserer verwendet. Insbesondere dienen sie zur Erniedrigung des CFPP-Werts, des CP-Werts und/oder des PP-Werts von damit additivierten Brennstoffölen.
Die oben beschriebenen Polymere werden alleine oder in Kombination mit konventionellen Kaltfließverbesserern in Mengen eingesetzt, die ausreichen, um eine Wirkung als Kaltfließverbesserer im additivierten Brennstofföl oder Schmierstoff zu zeigen. Unter Brennstoffölen versteht man erfindungsgemäß vorzugsweise Kraftstoffe. Geeignete Kraftstoffe sind Ottokraftstoffe und insbesondere Mitteldestillate, wie Dieselkraftstoffe, auch marine Dieselkraftstoffe, Heizöl oder Kerosin, wobei Dieselkraftstoff und Heizöl besonders bevorzugt sind.
Bei den Heizölen handelt es sich beispielsweise um schwefelarme oder schwefelreiche Erdölraffinate oder um Stein- oder Braunkohledestillate, die üblicherweise einen Siedebereich von 150 bis 400 °C aufweisen. Vorzugsweise handelt es sich bei den Heizölen um solche mit einem Schwefelgehalt von höchstens 1 Gew.-%, bevorzugt von höchstens 0,1 Gew. -%.
Als Beispiele für Heizöl sei insbesondere Heizöl für häusliche Ölfeuerungsanlagen oder Heizöl EL genannt. Die Qualitätsanforderungen für solche Heizöle sind beispielsweise in DIN 51-603-1 festgelegt (vgl. auch Ullmann's Encyclopedia of Industrial Chemistry, 5. Auflage, Bd. A12, S. 617 ff., worauf hiermit ausdrücklich Bezug genommen wird).
Bei den Dieselkraftstoffen handelt es sich beispielsweise um Erdölraffinate, die üblicherweise einen Siedebereich von 100 bis 400 °C haben. Dies sind meist Destillate mit einem 95%-Punkt bis zu 360 °C oder auch darüber hinaus. Dies können aber auch sogenannte "Ultra low sulfur diesel" oder "City diesel" sein, gekennzeichnet durch einen 95%-Punkt von beispielsweise maximal 345 °C und einem Schwefelgehalt von maximal 0,005 Gew.-% oder durch einen 95%-Punkt von beispielsweise 285 °C und einem Schwefelgehalt von maximal 0,001 Gew.-%.
Als Brennstofföle können auch marine Dieselkraftstoffe ("Schiffsdiesel") mit einem Schwefelgehalt von bis zu 4 Gew.-% eingesetzt werden.
Neben den durch Raffination erhältlichen Dieselkraftstoffen sind solche, die durch Kohlevergasung ("coal to liquid" (CTL) Kraftstoffe), Gasverflüssigung ("gas to liquid" (GTL) Kraftstoffe) oder Verflüssigung von Biomasse ("biomass to liquid" (BTL) Kraftstoffe) erhältlich sind, geeignet. BTL Kraftstoffe gehören auch zu den regenerativen Kraftstoffen.

Geeignet sind weiterhin regenerative Kraftstoffe, wie reine Pflanzenöle, Tallölfettsäuren, Biodiesel, Bioethanol oder BTL Kraftstoffe, ihre Gemische oder Mischungen der regenerativen Kraftstoffe mit den vorstehend genannten Dieselkraftstoffen oder Ottokraftstoffen.

Unter Biodiesel versteht man allgemein die Niederalkylester von Pflanzenölen (oder auch von tierischen Fetten), d.h. deren $C_1$-$C_4$-Alkylester, insbesondere deren Ethyl- oder Methylester und speziell deren Methylester. Biodiesel wird auch als FAME (FAME = fatty acid methyl ester) bezeichnet, wobei Rapsölmethylester (RME) einen der bekanntesten

FAME-Kraftstoffe darstellt. Biodiesel wird als solcher oder vor allem im Gemisch mit mineralischem Dieselkraftstoff eingesetzt.

Reine Pflanzenöle sind im Gegensatz zu FAME nicht umgeesterte, in Pflanzen (genauer: in deren Ölfrüchten) natürlich vorkommende Fettsäureester. Sie liegen in derjenigen Esterform vor, wie sie in der Pflanze (genauer: Ölfrucht) vorkommt, d.h. meist als Triglycerid. Grundsätzlich sind praktisch alle Pflanzenöle geeignet; am meisten ist jedoch Rapsöl, Sojaöl und Palmöl verbreitet.

Bioethanol wird großtechnisch durch Vergären stärke- und zuckerhaltiger Pflanzen (Zuckerrohr, Getreide etc.) hergestellt und wird als solches oder im Gemisch mit Ottokraftstoffen (Benzinen) eingesetzt.

Im Unterschied zur Produktion von Biodiesel und Bioethanol wird bei der Herstellung von BTL nicht nur die Energie der Früchte, sondern die gesamte Pflanze genutzt. Nahezu jede Biomasse ist nutzbar, z.B. Holzhackschnitzel, Rest- und Durchforstungsholz, Getreide, Stroh etc.

In einer besonderen Ausführungsform der Erfindung ist das erfindungsgemäß zu additivierende Brennstofföl ein Mitteldestillat, das 1 bis 100 Gew.-%, vorzugsweise 5 bis 100 Gew.-%, besonders bevorzugt 5 bis 50 Gew.-% und insbesondere 5 bis 20 Gew.-%, bezogen auf das Gesamtgewicht des Mitteldestillats, GTL Kraftstoff, BTL Kraftstoff, FAME und/oder reines Pflanzenöl, vorzugsweise GTL Kraftstoff, BTL Kraftstoff und/oder FAME, enthält.

Besonders bevorzugt wird das erfindungsgemäß eingesetzte Polymer zur Additivierung von Dieselkraftstoffen mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel oder zur Additivierung von Heizöl mit einem niedrigen Schwefelgehalt, beispielsweise mit einem Schwefelgehalt von höchstens 0,1 Gew.-%, bevorzugt von höchstens 0.05 Gew.-%, z.B. höchstens 0,005 Gew.-% oder z.B. höchstens 0,001 Gew.-%, verwendet.

Das erfindungsgemäß eingesetzte Polymer wird vorzugsweise in einem Mengenanteil, bezogen auf die Gesamtmenge der Brennstoffölzusammensetzung, eingesetzt, der für sich gesehen einen im Wesentlichen ausreichenden Einfluss auf die Kaltfließeigenschaften der Brennstoffölzusammensetzungen besitzt. Bevorzugt wird das Additiv in einer Menge von 0,001 bis 1 Gew.-%, besonders bevorzugt von 0,005 bis 0,15 Gew.-%, insbesondere von 0,005 bis 0,1 Gew.-%, speziell von 0,01 bis 0,05 Gew.-%, bezogen auf die Gesamtmenge der Brennstoffölzusammensetzung, eingesetzt.

**e) Schmierstoffzusammensetzungen**

Ein weiterer Gegenstand der Erfindung betrifft Schmierstoffzusammensetzungen, enthaltend einen größeren Gewichtsanteil eines herkömmlichen Schmierstoffs und einen kleineren Gewichtsanteil wenigstens eines Polymers gemäß obiger Definition und gegebenenfalls übliche Schmierstoffadditive.

**f) Coadditive**

Die erfindungsgemäßen Polymere können einzeln oder als Gemisch solcher Polymere und gegebenenfalls in Kombination mit weiteren an sich bekannten Zusatzstoffen den Brennstoffölzusammensetzungen zugegeben werden.

Geeignete Zusatzstoffe, die in erfindungsgemäßen Brennstoffölen neben den erfindungsgemäßen Polymer enthalten sein können, insbesondere für Dieselkraftstoffe und Heizöle, umfassen Detergentien, Korrosionsinhibitoren, Dehazer, Demulgatoren, Schaumverhinderer ("Antifoam"), Antioxidantien, Metalldesaktivatoren, multifunktionelle Stabilisatoren, Cetanzahlverbesserer, Verbrennungsverbesserer, Farbstoffe, Marker, Lösungsvermittler, Antistatika, Schmierfähigkeitsverbesserer, sowie weitere die Kälteeigenschaften des Brennstoffs verbessernde Additive, wie Nukleatoren, weitere herkömmliche Fließverbesserer ("MDFI"), Paraffindispergatoren ("WASA") und die Kombination der beiden zuletzt genannten Additive ("WAFI") (vgl. auch Ullmann's Encyclopedia of Industrial Chemistry , 5. Auflage, Bd.A16, S.719 ff; oder die eingangs zitierten Patentschriften zu Fließverbesserern).

Als weitere konventionelle Kaltfließverbesserer sind insbesondere zu nennen:

1. (a) Copolymere von Ethylen mit wenigstens einem weiteren ethylenisch ungesättigten Monomer, die von den erfindungsgemäß verwendeten Polymeren verschieden sind;
2. (b) Kammpolymere;
3. (c) Polyoxyalkylene;
4. (d) polare Stickstoffverbindungen;
5. (e) Sulfocarbonsäuren oder Sulfonsäuren oder deren Derivate;
6. (f) Poly(meth)acrylsäureester;
7. (g) Umsetzungsprodukte von Alkanolaminen mit Acylierungsmitteln;
8. (h) Kondensationsprodukte von Hydroxyaromaten mit Aldehyden; und
9. (i) Wachse.

Bei den Copolymeren von Ethylen mit wenigstens einem weiteren ethylenisch ungesättigten Monomer (a) ist das Monomer vorzugsweise ausgewählt unter Alkenylcarbonsäureestern, (Meth)Acrylsäureestern und Olefinen.

Geeignete Olefine sind beispielsweise solche mit 3 bis 10 Kohlenstoffatomen sowie mit 1 bis 3, vorzugsweise mit 1 oder 2, insbesondere mit einer, Kohlenstoff-Kohlenstoff-Doppelbindung. Im zuletzt genannten Fall kann die Kohlenstoff-Kohlenstoff-Doppelbindung sowohl terminal ($\alpha$-Olefine) als auch intern angeordnet sein kann. Bevorzugt sind jedoch $\alpha$-Olefine, besonders bevorzugt $\alpha$-Olefine mit 3 bis 6 Kohlenstoffatomen, wie Propen, 1-Buten, 1-Penten und 1-Hexen.

Geeignete (Meth)Acrylsäureester sind beispielsweise Ester der (Meth)Acrylsäure mit $C_1$-$C_{10}$-Alkanolen, insbesondere mit Methanol, Ethanol, Propanol, Isopropanol, n-Butanol, sec-Butanol, Isobutanol, tert-Butanol, Pentanol, Hexanol, Heptanol, Octanol, 2-Ethylhexanol, Nonanol und Decanol.

Geeignete Alkenylcarbonsäureester sind beispielsweise die Vinyl- und Propenylester von Carbonsäuren mit 2 bis 20 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der $\alpha$-Position zur Carboxylgruppe befindet, wobei das $\alpha$-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Alkenylcarbonsäureester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenylester, wobei die Vinylester bevorzugt sind. Ein besonders bevorzugter Alkenylcarbonsäureester ist Vinylacetat.

Besonders bevorzugt ist das ethylenisch ungesättigte Monomer ausgewählt unter Alkenylcarbonsäureestern.

Geeignet sind auch Copolymere, die zwei oder mehrere voneinander verschiedene Alkenylcarbonsäureester einpolymerisiert enthalten, wobei diese sich in der Alkenylfunktion und/oder in der Carbonsäuregruppe unterscheiden. Ebenfalls geeignet sind Copolymere, die neben dem/den Alkenylcarbonsäureester(n) wenigstens ein Olefin und/oder wenigstens ein (Meth)Acrylsäureester einpolymerisiert enthalten.

Das ethylenisch ungesättigte Monomer ist im Copolymer in einer Menge von vorzugsweise 1 bis 50 Mol.-%, besonders bevorzugt von 10 bis 50 Mol.-% und insbesondere von 5 bis 20 Mol.-%, bezogen auf das Gesamtcopolymer, einpolymerisiert.

Das Copolymer (a) weist vorzugsweise ein zahlenmittleres Molekulargewicht $M_n$ von 1000 bis 20000, besonders bevorzugt von 1000 bis 10000 und insbesondere von 1000 bis 6000, auf.

Kammpolymere (b) sind beispielsweise solche, die in "Comb-Like Polymers. Structure and Properties", N. A. Plate und V. P. Shibaev, J. Poly. Sci. Macromolecular Revs. 8, Seiten 117 bis 253 (1974) beschrieben sind. Von den dort beschriebenen sind beispielsweise Kammpolymere der Formel II geeignet

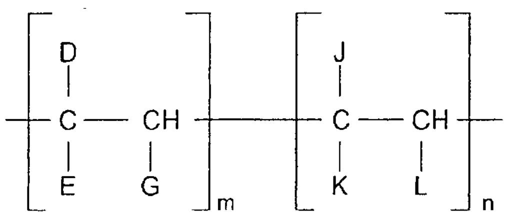

(II)

worin

D für $R^{17}$, $COOR^{17}$, $OCOR^{17}$, $R^{18}$, $OCOR^{17}$ oder $OR^{17}$ steht,
E für H, $CH_3$, D oder $R^{18}$ steht,
G für H oder D steht,
J für H, $R^{18}$, $R^{18}COOR^{17}$, Aryl oder Heterocyclyl steht,
K für H, $COOR^{18}$, $OCOR^{18}$, $OR^{18}$ oder COOH steht,
L für H, $R^{18}$ $COOR^{18}$, $OCOR^{18}$, COOH oder Aryl steht,
wobei
$R^{17}$ für einen Kohlenwasserstoffrest mit wenigstens 10 Kohlenstoffatomen, vorzugsweise mit 10 bis 30 Kohlenstoffatomen, steht,
$R^{18}$ für einen Kohlenwasserstoffrest mit wenigstens einem Kohlenstoffatom, vorzugsweise mit 1 bis 30 Kohlenstoffatomen, steht,
m für einen Stoffmengenanteil (Molenbruch) im Bereich von 1,0 bis 0,4 steht und n für einen Stoffmengenanteil (Molenbruch) im Bereich von 0 bis 0,6 steht.

Bevorzugte Kammpolymere sind beispielsweise durch die Copolymerisation von Maleinsäureanhydrid oder Fumarsäure mit einem anderen ethylenisch ungesättigten Monomer, beispielsweise mit einem $\alpha$-Olefin oder einem ungesättigten Ester, wie Vinylacetat, und anschließende Veresterung der Anhydrid- bzw. Säurefunktion mit einem Alkohol mit wenigstens 10 Kohlenstoffatomen erhältlich. Weitere bevorzugte Kammpolymere sind Copolymere von $\alpha$-Olefinen und veresterten Comonomeren, beispielsweise veresterte Copolymere von Styrol und Maleinsäureanhydrid oder veresterte Copolymere von Styrol und Fumarsäure. Auch Gemische von Kammpolymeren sind geeignet. Kammpolymere können auch Polyfumarate oder Polymaleinate sein. Außerdem sind Homo- und Copolymere von Vinylethern geeignete Kammpolymere.

Geeignete Polyoxyalkylene (c) sind beispielsweise Polyoxyalkylenester, -ether, - ester/ether und Gemische davon. Bevorzugt enthalten die Polyoxyalkylenverbindungen wenigstens eine, besonders bevorzugt wenigstens zwei lineare Alkylgruppen mit 10 bis 30 Kohlenstoffatomen und eine Polyoxyalkylengruppe mit einem Molekulargewicht von bis zu 5000. Die Alkylgruppe des Polyoxyalkylenrestes enthält dabei vorzugsweise 1 bis 4 Kohlenstoffatome. Derartige Polyoxyalkylenverbindungen sind beispielsweise in der EP-A-0 061 895 sowie in der US 4,491,455 beschrieben, worauf hiermit im vollem Umfang Bezug genommen wird. Bevorzugte Polyoxyalkylenester, - ether und ester/ether besitzen die allgemeine Formel III

$$R^{19}[O-(CH_2)_y]_xO-R^{20} \qquad (III)$$

worin

$R^{19}$ und $R^{20}$ jeweils unabhängig voneinander für $R^{21}$, $R^{21}$-CO-, $R^{21}$-O-CO$(CH_2)_z$- oder $R^{21}$-O-CO$(CH_2)_z$-CO- stehen, wobei $R^{21}$ für lineares $C_1$-$C_{30}$-Alkyl steht,
y für eine Zahl von 1 bis 4 steht,
x für eine Zahl von 2 bis 200 steht, und
z für eine Zahl von 1 bis 4 steht.

Bevorzugte Polyoxyalkylenverbindungen der Formel III, in denen sowohl $R^{19}$ als auch $R^{20}$ für $R^{21}$ stehen, sind Polyethylenglykole und Polypropylenglykole mit einem zahlenmittleren Molekulargewicht von 100 bis 5000. Bevorzugte Polyoxyalkylene der Formel III, in denen einer der Reste $R^{19}$ für $R^{21}$ und der andere für $R^{21}$-CO- steht, sind Polyoxyalkylenester von Fettsäuren mit 10 bis 30 Kohlenstoffatomen, wie Stearinsäure oder Behensäure. Bevorzugte Polyoxyalkylenverbindungen, in denen sowohl $R^{19}$ als auch $R^{20}$ für einen Rest $R^{21}$-CO- stehen, sind Diester von Fettsäuren mit 10 bis 30 Kohlenstoffatomen, bevorzugt von Stearin- oder Behensäure.

Die polaren Stickstoffverbindungen (d), die geeigneterweise öllöslich sind, können sowohl ionisch als auch nicht ionisch sein und besitzen vorzugsweise wenigstens einen, besonders bevorzugt wenigstens 2 Substituenten der Formel >$NR^{22}$, worin $R^{22}$ für einen $C_8$-$C_{40}$-Kohlenwasserstoffrest steht. Die Stickstoffsubstituenten können auch quaternisiert, das heißt in kationischer Form, vorliegen. Ein Beispiel für solche Stickstoffverbindungen sind Ammoniumsalze und/oder Amide, die durch die Umsetzung wenigstens eines mit wenigstens einem Kohlenwasserstoffrest substituierten Amins mit einer Carbonsäure mit 1 bis 4 Carboxylgruppen bzw. mit einem geeignetem Derivat davon erhältlich sind. Vorzugsweise enthalten die Amine wenigstens einen linearen $C_8$-$C_{40}$-Alkylrest. Geeignete primäre Amine sind beispielsweise Octylamin, Nonylamin, Decylamin, Undecylamin, Dodecylamin, Tetradecylamin und die höheren linearen Homologen. Geeignete sekundäre Amine sind beispielsweise Dioctadecylamin und Methylbehenylamin. Geeignet sind auch Amingemische, insbesondere großtechnisch zugänglicher Amingemische, wie Fettamine oder hydrierte Tallamine, wie sie beispielsweise in Ullmanns Encyclopedia of Industrial Chemistry, 6th edition, 2000 electronic release, Kapitel "Amines, aliphatic" beschrieben werden. Für die Umsetzung geeignete Säuren sind beispielsweise Cyclohexan-1,2-Dicarbonsäure, Cyclohexen-1,2-Dicarbonsäure, Cyclopentan-1,2-Dicarbonsäure, Naphthalindicarbonsäure, Phthalsäure, Isophthalsäure, Terephthalsäure und mit langkettigen Kohlenwasserstoffresten substituierte Bernsteinsäuren.

Ein weiteres Beispiel für polare Stickstoffverbindungen sind Ringsysteme, die wenigstens zwei Substituenten der Formel -A-$NR^{23}R^{2a}$ tragen, worin A für eine lineare oder verzweigte aliphatische Kohlenwasserstoffgruppe steht, die gegebenenfalls durch eine oder mehrere Gruppen, die ausgewählt sind unter O, S, $NR^{35}$ und CO, unterbrochen ist, und $R^{23}$ und $R^{2a}$ für einen $C_9$-$C_{40}$-Kohlenwasserstoffrest stehen, der gegebenenfalls durch eine oder mehrere Gruppen, die ausgewählt sind unter O, S, $NR^{35}$ und CO, unterbrochen und/oder durch einen oder mehrere Substituenten, die ausgewählt sind unter OH, SH und $NR^{35}R^{36}$ substituiert ist, wobei $R^{35}$ für $C_1$-$C_{40}$-Alkyl, das gegebenenfalls durch eine oder mehrere Gruppierungen, die ausgewählt sind unter CO, $NR^{35}$, O und S, unterbrochen, und/oder durch einen oder mehrere Reste, die ausgewählt sind unter $NR^{37}R^{38}$, $OR^{37}$, $SR^{37}$, $COR^{37}$, $COOH^{37}$, $CONR^{37}R^{38}$, Aryl oder Heterocyclyl substituiert ist, wobei $R^{37}$ und $R^{38}$ jeweils unabhängig voneinander ausgewählt sind unter H oder $C_1$-$C_4$-Alkyl; und $R^{36}$ für H oder $R^{35}$ steht.

Vorzugsweise ist A eine Methylen- oder Polymethylengruppe mit 2 bis 20 Methyleneinheiten. Beispiele für geeignete Reste $R^{23}$ und $R^{24}$ sind 2-Hydroxyethyl, 3-Hydroxypropyl, 4-Hydroxybutyl, 2-Ketopropyl, Ethoxyethyl und

Propoxypropyl. Bei dem cyclischen System kann es sich sowohl um homocyclische, heterocyclische, kondensierte polycyclische oder nicht kondensierte polycyclische Systeme handeln. Vorzugsweise ist das Ringsystem carbo- oder heteroaromatisch, insbesondere carboaromatisch. Beispiele für derartige polycyclische Ringsysteme sind kondensierte benzoide Strukturen, wie Naphthalin, Anthracen, Phenanthren und Pyren, kondensierte nichtbenzoide Strukturen, wie Azulen, Inden, Hydrinden und Fluoren, nicht kondensierte Polycyclen, wie Diphenyl, Heterocyclen, wie Chinolin, Indol, Dihydroindol, Benzofuran, Cumarin, Isocumarin, Benzthiophen, Carbazol, Diphenylenoxid und Diphenylensulfid, nicht aromatische oder teilweise gesättigte Ringsysteme, wie Decalin, und dreidimensionale Strukturen, wie $\alpha$ -Pinen, Camphen, Bornylen, Norbonan, Norbonen, Bicyclooctan und Bicycloocten.

Ein weiteres Beispiel für geeignete polare Stickstoffverbindungen sind Kondensate von langkettigen primären oder sekundären Aminen mit Carboxylgruppen-haltigen Polymeren.

Die hier genannten polaren Stickstoffverbindungen sind in der WO 00/44857 sowie in den darin genannten Literaturstellen beschrieben, worauf hiermit im vollem Umfang Bezug genommen wird.

Geeignete polare Stickstoffverbindungen sind z.B. auch in der DE-A-198 48 621 der DE-A-196 22 052 oder der EP-B-398 101 beschrieben, worauf hiermit Bezug genommen wird.

Geeignete Sulfocarbonsäuren/Sulfonsäuren bzw. deren Derivate (e) sind beispielsweise solche der allgemeinen Formel IV

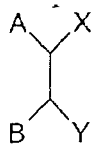

(IV)

worin

Y für $SO_3^-(NR^{25}_3R^{26})^+$, $SO_3^-(NHR^{25}_2R^{26})^+$, $SO_3^-(NH_2R^{25}R^{26})$, $SO_3^-(NH_3R^{26})$ oder $SO_2NR^{25}R^{26}$ steht,
X für Y, $CONR^{25}R^{27}$, $CO_2^-(NR^{25}_3R^{27})^+$, $CO_2^-(NHR^{25}_2R^{27})^+$, $R^{28}$-$COOR^{27}$, $NR^{25}COR^{27}$, $R^{28}OR^{27}$ $R^{28}OCOR^{27}$, $R^{28}R^{27}$, $N(COR^{25})R^{27}$ oder $Z$-$(NR^{25}_3R^{27})^+$ steht,
wobei
$R^{25}$ für einen Kohlenwasserstoffrest steht,
$R^{26}$ und $R^{27}$ für Alkyl, Alkoxyalkyl oder Polyalkoxyalkyl mit wenigstens 10 Kohlenstoffatomen in der Hauptkette stehen,
$R^{28}$ für $C_2$-$C_5$-Alkylen steht,
$Z^-$ für ein Anionenäquivalent steht und
A und B für Alkyl, Alkenyl oder zwei substituierte Kohlenwasserstoffreste stehen oder gemeinsam mit den Kohlenstoffatomen, an die sie gebunden sind, ein aromatisches oder cycloaliphatisches Ringsystem bilden.

Derartige Sulfocarbonsäuren bzw. Sulfonsäuren und ihre Derivate sind in der EP-A-0 261 957 beschrieben, worauf hiermit in vollem Umfang Bezug genommen wird. Geeignete Poly(meth)acrylsäureester (f) sind sowohl Homoals auch Copolymere von Acryl- und Methacrylsäureestern. Bevorzugt sind Acrylsäureester-Homopolymere, die sich von $C_1$-$C_{40}$-Alkoholen ableiten. Bevorzugt sind auch Copolymere von wenigstens zwei voneinander verschiedenen (Meth)Acrylsäureestern, die sich bezüglich des einkondensierten Alkohols unterscheiden. Gegebenenfalls enthält das Copolymer noch ein weiteres, davon verschiedenes olefinisch ungesättigtes Monomer einpolymerisiert. Das gewichtsmittlere Molekulargewicht des Polymers beträgt vorzugsweise 50000 bis 500000. Ein besonders bevorzugtes Polymer ist ein Copolymer von Methacrylsäure und Methacrylsäureestern von gesättigten $C_{14}$- und $C_{15}$-Alkoholen, wobei die Säuregruppen mit hydriertem Tallamin neutralisiert sind. Geeignete Poly(meth)acrylsäureester sind beispielsweise in der WO 00/44857 beschrieben, worauf hiermit in vollem Umfang Bezug genommen wird.

Zur Herstellung geeigneter Umsetzungsprodukte von Alkanolaminen mit Acylierungsmitteln (g) werden als Acylierungsmittel vorzugsweise solche verwendet, die einen Kohlenwasserstoffrest mit 8 bis 50 Kohlenstoffatomen enthalten. Beispiele hierfür sind mit einem $C_8$-$C_{50}$-, vorzugsweise $C_{12}$-$C_{35}$-Alkyl- oder Alkenylrest substituierte Bernsteinsäuren bzw. Bernsteinsäurederivate. Bei den Alkanolaminen handelt es sich beispielsweise um Diethanolamin, Dipropanolamin, Dibutanolamin, N-Methylethanolamin oder N-Ethylethanolamin. Solche Verbindungen sind beispielsweise in der WO 01/62874 beschrieben, auf die hiermit Bezug genommen wird.

Bei den zur Herstellung der Kondensationsprodukte von Hydroxyaromaten mit Aldehyden (h) eingesetzten Hydroxyaromaten handelt es sich um solche, die mit einem linearen oder verzweigten Kohlenwasserstoffrest substituiert sind. Der Hydroxyaromat kann sowohl ein substituiertes Phenol sein als auch jeder andere Hydroxygruppen-haltige Aromat, wie Naphthol. Als Aldehydkomponente können sowohl die Aldehyde selbst als auch geeignete Aldehydquellen eingesetzt werden. Beispiele für geeignete Aldehyde sind Formaldehyd (das z.B. als Paraldehyd oder Trioxan eingesetzt

werden kann), Acetaldehyd, Propanal, Butanal, Isobutyraldehyd, Heptanal, 2-Ethylhexanal und Glyoxalsäure. Derartige Kondensationsprodukte sind beispielsweise in der WO 01/62874 oder in der EP-A-1357168 beschrieben, auf die hiermit Bezug genommen wird.

Geeignete Wachse (i) sind sowohl lineare als auch nicht lineare Paraffine. Bei den n-Paraffinen handelt es sich vorzugsweise um $C_8$-$C_{35}$-, besonders bevorzugt um $C_8$-$C_{30}$- und insbesondere um $C_8$-$C_{25}$-Alkane. Die nichtlinearen Paraffine umfassen vorzugsweise amorphe Feststoffe mit einem Schmelzpunkt von 10 bis 60 °C und einem Molekulargewicht von 150 bis 500. Solche Wachse sind beispielsweise in der EP-A-1357168 beschrieben, auf die hiermit Bezug genommen wird.

Bevorzugte Co-Additive sind vor allem solche der Gruppe (a), wobei hierunter Ethylen/Vinylacetat-Copolymere besonders bevorzugt sind.

**g) Additivpakete**

Schließlich ist Gegenstand der vorliegenden Anmeldung ein Additivpaket, das neben wenigstens einem wie vorstehend definierten erfindungsgemäß einzusetzenden Polymer wenigstens ein weiteres Kraftstoffadditiv und/oder wenigstens ein Verdünnungsmittel enthält.

Geeignete weitere Kraftstoffadditive (Co-Additive) sind die vorstehend genannten.

Geeignete Verdünnungsmittel sind beispielsweise bei der Erdölverarbeitung anfallende Fraktionen, wie Kerosin, Naphtha oder Brightstock. Geeignet sind darüber hinaus aromatische und aliphatische Kohlenwasserstoffe und Alkoxyalkanole. Bei Mitteldestillaten, insbesondere bei Dieselkraftstoffen und Heizölen bevorzugt verwendete Verdünnungsmittel sind Naphtha, Kerosin, Dieselkraftstoffe, aromatische Kohlenwasserstoffe, wie Solvent Naphtha schwer, Solvesso® oder Shellsol® sowie Gemische dieser Lösungs- und Verdünnungsmittel.

Geeignete Verdünnungsmittel sind beispielsweise bei der Erdölverarbeitung anfallende Fraktionen, wie Kerosin, Naphtha oder Brightstock. Geeignet sind darüber hinaus aromatische und aliphatische Kohlenwasserstoffe und Alkoxyalkanole. Bei Mitteldestillaten, insbesondere bei Dieselkraftstoffen und Heizölen bevorzugt verwendete Verdünnungsmittel sind Naphtha, Kerosin, Dieselkraftstoffe, aromatische Kohlenwasserstoffe, wie Solvent Naphtha schwer, Solvesso® oder Shellsol® sowie Gemische dieser Lösungs- und Verdünnungsmittel.

In den Additivpaketen liegt das erfindungsgemäß verwendete Polymer in einer Menge von vorzugsweise 0,1 bis 99 Gew.-%, besonders bevorzugt von 1 bis 95 Gew.-% und insbesondere von 5 bis 90 Gew.-% vor.

Wenn das Additivpaket ein Verdünnungsmittel enthält, so liegt das erfindungsgemäß verwendete Polymer in den Konzentraten vorzugsweise in einer Menge von 0,1 bis 90 Gew.-%, besonders bevorzugt von 1 bis 80 Gew.-% und insbesondere von 5 bis 75 Gew.-%, bezogen auf das Gesamtgewicht des Konzentrats, vor.

Durch die Verwendung der erfindungsgemäß einzusetzenden Polymere werden die Kaltfließeigenschaften von damit additivierten Brennstoffölen, v.a. von Mitteldestillaten, deutlich verbessert. Insbesondere werden der der PP (pour point; Stockpunkt) und/oder der CFPP (cold filter plugging point) deutlich herabgesetzt. Außerdem zeichnen sich die erfindungsgemäß einzusetzenden Polymere durch eine besonders gute Handhabbarkeit (gute "Handlingeigenschaften") aus. Insbesondere lassen sich die erfindungsgemäß einzusetzenden Polymere bei deutlich niedrigeren Temperaturen in das zu additivierende Brennstofföl einmischen als vergleichbare Kaltfließverbesserer des Standes der Technik.

Die Erfindung wird nun anhand der folgenden nicht einschränkenden Beispiele näher erläutert.

**Experimenteller Teil:**

**a) Herstellungsbeispiele 1 bis 18**

Es wurden insgesamt 17 verschiedene erfindungsgemäß einzusetzende Polymere durch Hochdruckpolymerisation von Ethylen, Vinylacetat und einem Gemisch aus 2-Propylheptylacrylat und 4-Methyl-2-propylhexylacrylat im Gewichtsverhältnis von etwa 9:1 (Polymere 1 bis 10), oder von Ethylen, Vinylacetat, 2-Ethylhexylacrylat und einem Gemisch aus 2-Propylheptylacrylat und 4-Methyl-2-propylhexylacrylat im Gewichtsverhältnis von etwa 9:1 (Polymere 11 und 12), oder von Ethylen, Vinylacetat, 2-Ethylhexylacrylat und einem Gemisch aus Laurylacrylat und Myristylacrylat im Gewichtsverhältnis von etwa 55:45 (Polymere 13 bis 1 7). Der nicht erfindungsgemäße Polymer 18 wurde durch Hochdruckpolymerisation von Ethylen, Vinylacetat, 2-Ethylhexylacrylat und Vinyllaurat hergestellt.

In Tabelle 1 sind die Eigenschaften der in den nachfolgenden Testbeispielen eingesetzten Polymerisate zusammengestellt.

Der Monomerengehalt in den erhaltenen Polymeren wurde NMR-spektroskopisch bestimmt. Der Ethylengehalt stellt die Differenz zu 100 Gew.-% dar. Die Viskositäten wurden nach Ubbelohde DIN 51562 bei 120 °C bestimmt.

Tabelle 1

| Polymer Nr. | VAC [Gew.-%] | M3 [Gew.-%] | M4 [Gew.-%] | Viskosität [$mm^2/s$] | $M_n$ | $M_w/M_n$ |
|---|---|---|---|---|---|---|
| 1 | 25,1 | 13,7[1] | - | 148 | 2798 | 2,26 |
| 2 | 25,1 | 12,3[1] | - | 62 | 2109 | 2,03 |
| 3 | 25,1 | 12,3[1] | - | 300 | 3443 | 2,38 |
| 4 | 22,0 | 9,5[1] | - | 148 | 2839 | 2,20 |
| 5 | 22,8 | 9,3[1] | - | 65 | 2054 | 2,02 |
| 6 | 21,4 | 12,2[1] | - | 155 | 2913 | 2,20 |
| 7 | 23,3 | 13,0[1] | - | 100 | 2441 | 2,08 |
| 8 | 24,3 | 13,7[1] | - | 150 | 3114 | 1,99 |
| 9 | 24,3 | 14,4[1] | - | 150 | 2868 | 2,27 |
| 10 | 16,9 | 23,7[1] | - | 210 | 3302 | 2,36 |
| 11 | 23,6 | 5,5[2] | - | 150 | 2831 | 2,23 |
| | | 6,5[1] | | | | |
| 12 | 23,6 | 5,5[2] | - | 310 | 3638 | 2,33 |
| | | 6,5[1] | | | | |
| 13 | 24,1 | 7,6[2] | - | 150 | 2668 | 2,43 |
| | | 5,5[3] | | | | |
| 14 | 24,1 | 5,7[2] | - | 70 | 2282 | 1,99 |
| | | 7,1[3] | | | | |
| 15 | 24,1 | 5,7[2] | - | 160 | 2859 | 2,35 |
| | | 7,1[3] | | | | |
| 16 | 24,1 | 5,7[2] | - | 300 | 3698 | 2,49 |
| | | 7,1[3] | | | | |
| 17 | 24,1 | 3,8[2] | - | 150 | 3077 | 2,22 |
| | | 9,1[3] | | | | |
| 18 | 22,0 | 13[2] | 5[4] | 300 | 3213 | 2,98 |

VAC: Vinylacetat [1] Gemisch aus 90 Gew.-% 2-Propylheptylacrylat und 10 Gew.-% 4-Methyl-2-propylhexylacrylat
[2] 2-Ethylhexylacrylat
[3] Gemisch aus 55 Gew.-% Laurylacrylat und 45 Gew.-% Myristylacrylat
[4] Vinyllaurat

**2. Testbeispiele**

Mit den obigen Polymeren wurden 50%ige oder 60%ige Polymerlösungen in Solvent Naphtha hergestellt (d.h. 50 Gew.-% Polymer + 50 Gew.-% Solvent Naphtha oder 60 Gew.-% Polymer + 40 Gew.-% Solvent Naphtha). Mit diesen Polymerlösungen 1 bis 18 wurden die nachfolgenden Versuche durchgeführt. Zu Vergleichszwecken wurden folgende herkömmliche MDFI mitgetestet:

Vergleichsprodukt A: Ethylen-Vinylacetat-basierte Polymermischung; 60 % Polymergehalt (BASF AG)
Vergleichsprodukt B: Ethylen-Vinylacetat-basierte Polymermischung; 50 % Polymergehalt (BASF AG)
Vergleichsprodukt C: Ethylen/Vinylacetat/2-Ethylhexylacrylat-Copolymer; 60 % Polymergehalt
Vergleichsprodukt D: Ethylen/Vinylacetat/2-Ethylhexylacrylat-Copolymer; 50 % Polymergehalt

Es wurden herkömmliche Mitteldestillat-Brennstoffe mit obigen erfindungsgemäßen bzw. herkömmlichen Kaltfließverbesserern in unterschiedlichen Dosierraten additiviert und die Mindesteinmischtemperatur, sowie der CFPP-Wert (Cold Filter Plugging Point) der additivierten Brennstoffe bestimmt. Außerdem wurde der CP-Wert (Cloud Point; Trübungspunkt) und der PP-Wert (Pour Point; Stockpunkt) der Kaltfließverbesserer bestimmt. Der CP-Wert wurde nach ASTM D 2500, der PP-Wert nach ASTM D 97 und der CFPP-Wert nach DIN EN 116 bestimmt.

Die Mindesteinmischtemperatur wurde nach einem modifizierten SEDAB-Filtrationstest bestimmt:

Hierzu wird ein Edelstahl-Vakuumfiltrationsgerät (SM 16201 der Firma Sartorius) mit einem 500 ml Filterbecher, einer 1000 ml Saugflasche und einem Membranfilter (11304 der Firma Sartorius; 50 mm Durchmesser, 0,8 μm Porenweite; 30 min bei 90 °C getrocknet und trocken gelagert) verwendet.

Das Brennstofföl wird zum Entfernen von Wasser, Schmutz und Kokerbestandteilen über einen Faltenfilter vorfiltriert. Pro Versuch werden 500 ml des vorfiltrierten und u-nadditivierten Brennstofföls in einen 1000 ml Mischzylinder gefüllt und auf die zu prüfende Temperatur gebracht. Das temperierte Brennstofföl wird mit dem unverdünnten 40 °C warmen MDFI (500 ppm) versetzt und sofort durch zehnmaliges leichtes Kippen des Mischzylinders homogenisiert. Der Membranfilter wird mit der Filteroberseite in das Filtrationsgerät eingelegt und bei geschlossenem Hahn wird der Druck auf 200 mbar eingestellt. Der aufgesetzte Filterbecher wird mit der homogenisierten Probe (500 ml) befüllt. Der Hahn wird geöffnet und die Filtrationszeit wird bestimmt.

Proben, die innerhalb von 120 s vollständig filtrierbar sind, gelten als "PASS"; es wird die Filtrationsdauer bei der gegebenen Temperatur festgehalten. Proben, bei denen die Filtrationsdauer mehr als 120 s beträgt, gelten als "FAIL"; es wird das Restvolumen, das nach 120 s noch im Filterbecher enthalten ist, bestimmt. Bei solchen Proben wird die Temperatur des Brennstofföls um 5 °C erhöht und die Filtrationszeit wird erneut bestimmt. Die Temperaturerhöhung um jeweils 5 °C wird sooft wiederholt, bis die Probe innerhalb von 120 s vollständig filtrierbar ist; es wird die Filtrationsdauer bei der entsprechenden Temperatur festgehalten. Umgekehrt wird bei Proben, die innerhalb von 120 s vollständig filtrierbar sind, die Temperatur des Brennstofföls sukzessive um jeweils 5 °C erniedrigt, bis die Probe innerhalb von 120 s nicht mehr vollständig filtrierbar ist.

**Testbeispiel 2.1: Mindesteinmischtemperatur der Additive**

Untersucht wurde die Mindesteinmischtemperatur im Mitteldestillat, wobei auf 40 °C erwärmte 50%ige Lösungen der erfindungsgemäß verwendeten Polymere in Solvent Naphtha bzw. die oben angegebenen Vergleichsprodukte eingesetzt wurden. Die Mindesteinmischtemperatur ist insbesondere für solche Raffinerien von Belang, die Additive unbeheizt in Brennstofföle einmischen oder Additive in unbeheizte Brennstofföle einmischen. Ist die Mindesteinmischtemperatur des Additivs hoch, so kann es nach dem unbeheizten Einmischen zu Filterproblemen kommen.

Eingesetztes Mitteldestillat: Dieselkraftstoff, CP = -12,2 °C, CFPP = -13 °C, Dichte 835,5 kg/$m^3$, IBP = 206 °C, FBP = 343 °C, 22,6 % n-Paraffine, 90-20 = 74 °C. Dosierung der Additive: 500 ppm der Polymerlösung

Tabelle 2

| Additiv | Mindesteinmischtemperatur [°C] | Durchlaufzeit [s] | Restvolumen [ml] |
|---|---|---|---|
| kein Additiv | 10 | 74 | - |
| Polymerlösung Nr. 2 | 20 | 70 | - |
| Polymerlösung Nr. 3 | 20 | 71 | - |
| Polymerlösung Nr. 13 | 20 | 116 | - |
| Polymerlösung Nr. 14 | 10 | 78 | - |
| Polymerlösung Nr. 15 | 10 | 91 | - |
| Polymerlösung Nr. 15 | 20 | 78 | - |
| Polymerlösung Nr. 16 | 10 | 111 | - |
| Polymerlösung Nr. 17 | 20 | 97 | - |
| Vergleichsprodukt A | 20 | > 120 | 240 |
| Vergleichsprodukt B | 35 | 106 | - |
| Vergleichsprodukt C | 20 | > 120 | 180 |
| Vergleichsprodukt C | 35 | 72 | - |

Wie die obigen Ergebnisse zeigen, besitzen die erfindungsgemäß verwendeten Polymere in der 50%igen Lösung eine deutlich niedrigere Mindesteinmischtemperatur als die Lösung der herkömmlichen Additive.

**Testbeispiel 2.2: Trübungspunkt (CP)**

Der CP-Wert wurde nach ASTM D 2500 bestimmt, wobei 60%ige Lösungen der erfindungsgemäßen Polymere in Solvent Naphtha bzw. die oben angegebenen Vergleichsprodukte eingesetzt wurden.

Tabelle 3

| Additiv | CP [°C] |
|---|---|
| Polymerlösung Nr. 1 | 45 |
| Polymerlösung Nr. 3 | 46 |
| Polymerlösung Nr. 7 | 40 |
| Polymerlösung Nr. 8 | 44 |
| Polymerlösung Nr. 9 | 35 |
| Polymerlösung Nr. 10 | 35 |
| Polymerlösung Nr. 11 | 48 |
| Polymerlösung Nr. 12 | 43 |
| Polymerlösung Nr. 13 | 29 |
| Polymerlösung Nr. 14 | 29 |
| Polymerlösung Nr. 15 | 27 |
| Polymerlösung Nr. 16 | 31 |
| Polymerlösung Nr. 17 | 30 |
| Polymerlösung Nr. 18 | 29 |
| Vergleichsprodukt A | 55 |
| Vergleichsprodukt C | 50 |

Wie die obigen Ergebnisse zeigen, besitzen die erfindungsgemäßen Additive in der 60%igen Lösung einen deutlich niedrigeren CP-Wert als die Lösung der herkömmlichen Additive.

**Testbeispiel 2.3: Stockpunkt (PP)**

Der PP der Additive wurde gemäß ASTM D 2500 bestimmt, wobei 60%ige Lösungen der Polymere in Solvent Naphtha bzw. die oben angegebenen Vergleichsprodukte eingesetzt wurden. Der Stockpunkt der Additive spielt für die Handhabung beim Einmischen in das Brennstofföl eine wichtige Rolle. Ein möglichst tiefer PP ermöglicht die bequeme Handhabung der Additive beim Einmischen auch bei tiefen Temperaturen und erspart Heizkosten für Additiv-Tanks.

Tabelle 4

| Additiv | PP [°C] |
|---|---|
| Polymerlösung Nr. 1 | 0 |
| Polymerlösung Nr. 2 | 6 |
| Polymerlösung Nr. 3 | 12 |
| Polymerlösung Nr. 4 | 6 |
| Polymerlösung Nr. 5 | 9 |
| Polymerlösung Nr. 6 | 15 |
| Polymerlösung Nr. 7 | 12 |

(fortgesetzt)

| Additiv | PP [°C] |
|---|---|
| Polymerlösung Nr. 8 | 3 |
| Polymerlösung Nr. 9 | 3 |
| Polymerlösung Nr. 10 | 12 |
| Polymerlösung Nr. 11 | 9 |
| Polymerlösung Nr. 12 | 15 |
| Polymerlösung Nr. 13 | 0 |
| Polymerlösung Nr. 14 | 9 |
| Polymerlösung Nr. 15 | 3 |
| Polymerlösung Nr. 16 | 9 |
| Polymerlösung Nr. 17 | 3 |
| Polymerlösung Nr. 18 | 6 |
| Vergleichsprodukt A | 24 |
| Vergleichsprodukt B | 18 |
| Vergleichsprodukt C | 30 |

Wie die obigen Ergebnisse zeigen, besitzen die erfindungsgemäßen Additive in der 60%igen Lösung einen deutlich niedrigeren Stockpunkt als die Lösung der herkömmlichen Additive.

**Testbeispiel 2.4: Verbesserung der Kaltfließeigenschaften von Mitteldestillaten (CFPP)**

Es wurden 50%ige Polymerlösungen (50 Gew.-% Polymer) verwendet.

**Beispiel a)**

Eingesetztes Mitteldestillat: Heizöl, CP = 10,1 °C, CFPP = 7 °C, Dichte 861,5 kg/m$^3$, IBP = 181 °C, FBP = 391 °C, 90-20 = 95 °C, 21 % n-Paraffine, 28 % Aromaten. Dosierung der Additive: 1000 ppm der Polymerlösung

Tabelle 5

| Additiv | CFPP [°C] |
|---|---|
| Vergleichsprodukt A | 6 |
| Vergleichsprodukt B | 2 |
| Vergleichsprodukt C | 7 |
| Polymerlösung Nr. 1 | 0 |
| Polymerlösung Nr. 3 | -4 |
| Polymerlösung Nr. 4 | -4 |
| Polymerlösung Nr. 5 | -4 |
| Polymerlösung Nr. 6 | -6 |
| Polymerlösung Nr. 7 | -3 |
| Polymerlösung Nr. 8 | -6 |
| Polymerlösung Nr. 9 | -6 |
| Polymerlösung Nr. 10 | -4 |
| Polymerlösung Nr. 12 | -3 |

(fortgesetzt)

| Additiv | CFPP [°C] |
|---|---|
| Polymerlösung Nr. 13 | -7 |
| Polymerlösung Nr. 14 | -5 |
| Polymerlösung Nr. 15 | -7 |
| Polymerlösung Nr. 16 | -4 |
| Polymerlösung Nr. 17 | -7 |
| Polymerlösung Nr. 18 | -8 |

**Beispiel b)**

Eingesetztes Mitteldestillat: Dieselkraftstoff, CP = 5 °C, CFPP = 2 °C, Dichte 826,4 kg/$m^3$, IBP = 180 °C, FBP = 373 °C, 90-20 = 106 °C, 28 % n-Paraffine, 20 % Aromaten.
Dosierung der Additive: 400 ppm der Polymerlösung

Tabelle 6

| Additiv | CFPP [°C] |
|---|---|
| Vergleichsprodukt A | -4 |
| Vergleichsprodukt B | -6 |
| Vergleichsprodukt C | -6 |
| Vergleichsprodukt D | -6 |
| Polymerlösung Nr. 1 | -8 |
| Polymerlösung Nr. 3 | -8 |
| Polymerlösung Nr. 4 | -8 |
| Polymerlösung Nr. 6 | -9 |
| Polymerlösung Nr. 7 | -9 |
| Polymerlösung Nr. 9 | -8 |
| Polymerlösung Nr. 10 | -8 |
| Polymerlösung Nr. 11 | -8 |
| Polymerlösung Nr. 13 | -8 |
| Polymerlösung Nr. 15 | -8 |
| Polymerlösung Nr. 17 | -8 |
| Polymerlösung Nr. 18 | -8 |

**Beispiel c)**

Eingesetztes Mitteldestillat: Heizöl, CP = 0 °C, CFPP = -1 °C, Dichte 858,9 kg/$m^3$, IBP = 167 °C, FBP = 377 °C, 90-20 = 145 °C, 18 % n-Paraffine, 39 % Aromaten.
Dosierung der Additive: 350 ppm der Polymerlösung

Tabelle 7

| Additiv | CFPP [°C] |
|---|---|
| Vergleichsprodukt A | -8 |
| Vergleichsprodukt C | -10 |

(fortgesetzt)

| Additiv | CFPP [°C] |
|---|---|
| Vergleichsprodukt D | -10 |
| Polymerlösung Nr. 1 | -14 |
| Polymerlösung Nr. 3 | -14 |
| Polymerlösung Nr. 4 | -12 |
| Polymerlösung Nr. 5 | -15 |
| Polymerlösung Nr. 6 | -12 |
| Polymerlösung Nr. 7 | -13 |
| Polymerlösung Nr. 9 | -13 |
| Polymerlösung Nr. 11 | -14 |
| Polymerlösung Nr. 12 | -14 |
| Polymerlösung Nr. 13 | -12 |
| Polymerlösung Nr. 15 | -12 |
| Polymerlösung Nr. 16 | -13 |

**Beispiel d)**

Eingesetztes Mitteldestillat: Dieselkraftstoff, CP = -8,5 °C, CFPP = -9 °C, Dichte 830,5 kg/$m^3$, IBP = 165 °C, FBP = 342 °C, 90-20 = 75 °C, 22 % n-Paraffine.
Dosierung der Additive: 1000 ppm der Polymerlösung

Tabelle 8

| Additiv | CFPP [°C] |
|---|---|
| Vergleichsprodukt C | -16 |
| Vergleichsprodukt D | -14 |
| Polymerlösung Nr. 1 | -18 |
| Polymerlösung Nr. 7 | -20 |
| Polymerlösung Nr. 8 | -20 |
| Polymerlösung Nr. 9 | -20 |
| Polymerlösung Nr. 11 | -18 |
| Polymerlösung Nr. 13 | -20 |
| Polymerlösung Nr. 14 | -22 |
| Polymerlösung Nr. 15 | -19 |
| Polymerlösung Nr. 17 | -19 |

**Beispiel e)**

Eingesetztes Mitteldestillat: Heizöl, CP = 0,5 °C, CFPP = 0 °C, Dichte 861,1 kg/$m^3$, IBP = 176 °C, FBP = 372 °C, 90-20 = 125 °C, 17,8 % n-Paraffine.
Dosierung der Additive: 350 ppm der Polymerlösung

Tabelle 9

| Additiv | CFPP [°C] |
|---|---|
| Vergleichsprodukt A | -11 |
| Vergleichsprodukt B | -12 |
| Vergleichsprodukt D | -15 |
| Polymerlösung Nr. 2 | -17 |
| Polymerlösung Nr. 5 | -18 |
| Polymerlösung Nr. 6 | -19 |
| Polymerlösung Nr. 7 | -18 |
| Polymerlösung Nr. 8 | -19 |
| Polymerlösung Nr. 9 | -19 |
| Polymerlösung Nr. 10 | -20 |
| Polymerlösung Nr. 11 | -20 |
| Polymerlösung Nr. 12 | -20 |
| Polymerlösung Nr. 13 | -17 |
| Polymerlösung Nr. 14 | -17 |
| Polymerlösung Nr. 15 | -18 |
| Polymerlösung Nr. 16 | -19 |
| Polymerlösung Nr. 18 | -19 |

**Beispiel f)**

Eingesetztes Mitteldestillat: Dieselkraftstoff, CP = -5,9 °C, CFPP = -9 °C, Dichte 837,3 kg/$m^3$, IBP = 178 °C, FBP = 364 °C, 90-20 = 111 °C, 16,6 % n-Paraffine; enthält 150 ppm WASA.
Dosierung der Additive: 100 ppm der Polymerlösung

Tabelle 10

| Additiv | CFPP [°C] |
|---|---|
| Vergleichsprodukt C | -21 |
| Vergleichsprodukt D | -21 |
| Polymerlösung Nr. 1 | -27 |
| Polymerlösung Nr. 3 | -27 |
| Polymerlösung Nr. 4 | -26 |
| Polymerlösung Nr. 5 | -27 |
| Polymerlösung Nr. 6 | -27 |
| Polymerlösung Nr. 7 | -26 |
| Polymerlösung Nr. 8 | -27 |
| Polymerlösung Nr. 9 | -26 |
| Polymerlösung Nr. 11 | -27 |
| Polymerlösung Nr. 12 | -27 |
| Polymerlösung Nr. 13 | -26 |
| Polymerlösung Nr. 14 | -25 |

(fortgesetzt)

| Additiv | CFPP [°C] |
|---|---|
| Polymerlösung Nr. 15 | -26 |
| Polymerlösung Nr. 16 | -25 |
| Polymerlösung Nr. 17 | -27 |
| Polymerlösung Nr. 18 | -25 |

Die in den Tabellen 5 bis 10 zusammengefassten Testergebnisse belegen eine überraschend gute Performance der erfindungsgemäß verwendeten Polymere als Cold Flow Improver in Mitteldestillaten. Mit den erfindungsgemäßen Additiven ist es nun einerseits möglich, vergleichbare CFPP-Werte wie mit herkömmlichen MDFI's, jedoch bei geringerer Dosierrate einzustellen, bzw. bei gleicher Dosierung verbesserte CFPP-Werte zu erzielen.

Wie die Testbeispiele 2.1 bis 2.3 zeigen, ermöglichen die erfindungsgemäß verwendeten Polymere außerdem eine bessere und bequemere Handhabung, da sie bei niedrigeren Temperaturen einmischbar sind und außerdem einen niedrigeren Stockpunkt aufweisen als herkömmliche Additive, so dass sie oder die Brennstofföle vor dem Einmischen nicht oder weniger aufgewärmt werden müssen.

## Patentansprüche

**1.** Verwendung
eines Polymers B, das aus Monomeren umfassend wenigstens ein Monomer der Formel M1, wenigstens ein Monomer der Formel M2, wenigstens zwei Monomere der Formel M3, gegebenenfalls wenigstens ein Monomer der Formel M4 und gegebenenfalls wenigstens ein Monomer der Formel M5 aufgebaut ist, wobei M1, M2, M3, M4 und M5 die folgenden allgemeinen Formeln besitzen:

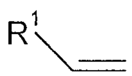
M1

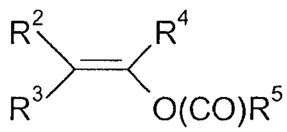
M2

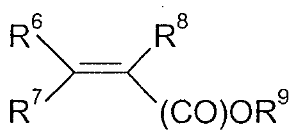
M3

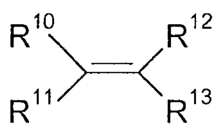
M4

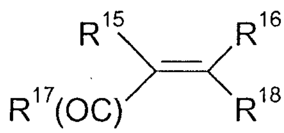
M5

worin

$R^1$ für H oder $C_1$-$C_{40}$-Alkyl steht;

$R^2$, $R^3$ und $R^4$ unabhängig voneinander für H oder $C_1$-$C_4$-Alkyl stehen;
$R^5$ für $C_1$-$C_{20}$-Alkyl steht;
$R^6$, $R^7$ und $R^8$ unabhängig voneinander für H oder $C_1$-$C_4$-Alkyl stehen;
$R^9$ im ersten Monomer M3 für $C_4$-$C_{20}$-Alkyl steht und im zweiten und in jedem weiteren Monomer M3 für $C_9$-$C_{20}$-Alkyl steht, wobei die Reste $R^9$ in den verschiedenen Monomeren M3 verschieden sind;
$R^{10}$, $R^{11}$ und $R^{12}$ unabhängig voneinander für H oder $C_1$-$C_4$-Alkyl stehen;
$R^{13}$ für $O(CO)R^{14}$ steht;
$R^{14}$ für $C_3$-$C_{19}$-Alkyl steht;
$R^{15}$ für H oder $C_1$-$C_4$-Alkyl steht;
$R^{17}$ für $OR^{19}$ steht;
einer der Reste $R^{16}$ und $R^{18}$ für $-(CO)R^{20}$ steht und der andere Rest für H oder $C_1$-$C_4$-Alkyl steht;
$R^{20}$ für $OR^{21}$ steht; und
$R^{19}$ und $R^{21}$ unabhängig voneinander für H oder $C_1$-$C_{20}$-Alkyl stehen;
oder $R^{17}$ und $R^{20}$ bilden gemeinsam eine Gruppe -O-;

mit der Maßgabe, dass die durchschnittliche Anzahl der Kohlenstoffatome aller Reste $R^9$, $R^{13}$, $R^{19}$ und $R^{21}$ 8,5 bis 20 beträgt und dass $R^5$ und $R^{14}$ verschieden sind, und
wobei in wenigstens einem Monomer M3 $R^9$ für einen verzweigten Alkylrest steht und das Molverhältnis von Monomeren M3 mit verzweigtem Alkylrest $R^9$ zu Monomeren M3 mit linearem Alkylrest $R^9$ 1:5 bis 1:0 beträgt;
wobei es sich bei Polymer B nicht um ein Pfropfcopolymer handelt; und wobei das Polymer B die Monomere M1, M2, M3, gegebenenfalls M4 und gegebenenfalls M5 im Wesentlichen in statistischer Verteilung enthält; als Kaltfließverbesserer für Brennstofföle und Schmierstoffe.

2. Verwendung nach Anspruch 1, wobei die durchschnittliche Anzahl der Kohlenstoffatome aller Reste $R^9$, $R^{13}$, $R^{19}$ und $R^{21}$ 9 bis 20 beträgt.

3. Verwendung nach einem der vorhergehenden Ansprüche, wobei die Monomeren M1, M2, M3, M4 und M5 in folgenden molaren Anteilen im Polymer enthalten sind:

M1: 0,60 bis 0,97
M2: 0,02 bis 0,25
M3: 0,01 bis 0,15
M4: 0 bis 0,10
M5: 0 bis 0,02.

4. Verwendung nach einem der vorhergehenden Ansprüche, wobei im Polymer B $R^9$ im ersten Monomer M3 für $C_6$-$C_{20}$-Alkyl steht.

5. Verwendung nach einem der vorhergehenden Ansprüche, wobei im Polymer B in einem der Monomere M3 $R^9$ für 2-Propylheptyl steht.

6. Verwendung nach einem der Ansprüche 1 bis 4, wobei im Polymer B in einem der Monomere M3 $R^9$ für 2-Ethylhexyl steht und in einem zweiten Monomer M3 $R^9$ für 2-Propylheptyl, Lauryl oder Myristyl steht.

7. Verwendung nach einem der vorhergehenden Ansprüche, wobei das Polymer B zwei Monomere M3 der Formeln M3.1 und M3.2 und gegebenenfalls ein weiteres Monomer M3 der Formel M3.3 umfasst:

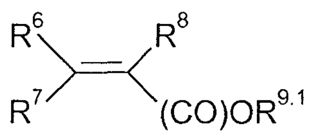

M3.1

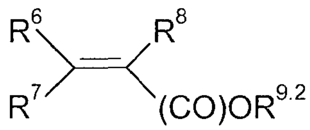

M3.2

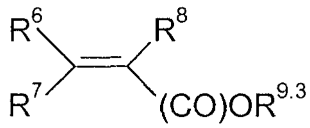

M3.3

worin jedes $R^6$, jedes $R^7$ und jedes $R^8$ unabhängig wie in Anspruch 1 definiert ist;
$R^{9.1}$ für $C_6$-$C_{20}$-Alkyl steht;
$R^{9.2}$ für $C_9$-$C_{20}$)-Alkyl steht; und
$R^{9.3}$ für $C_9$-$C_{20}$-Alkyl steht;
mit der Maßgabe, dass die durchschnittliche Anzahl der Kohlenstoffatome der Reste $R^{9.1}$, $R^{9.2}$ und $R^{9.3}$ 9 bis 20 beträgt und dass $R^{9.1}$, $R^{9.2}$ und $R^{9.3}$ verschieden sind.

**8.** Verwendung nach Anspruch 7, wobei $R^{9.1}$ für 2-Propylhept-1-yl steht.

**9.** Verwendung nach Anspruch 8, wobei $R^{9.1}$ für 2-Propylhept-1-yl steht und $R^{9.2}$ für ein davon verschiedenes Decylisomer steht.

**10.** Verwendung nach Anspruch 7, wobei $R^{9.1}$ für 2-Ethylhexyl steht, $R^{9.2}$ für 2-Propylhept-1-yl und $R^{9.3}$ für ein davon verschiedenes Decylisomer steht oder $R^{9.2}$ für Lauryl steht und $R^{9.3}$ für Myristyl steht.

**11.** Verwendung nach einem der vorhergehenden Ansprüche, wobei das Polymer wenigstens ein Monomer M4 umfasst, wobei $R^{14}$ für $C_9$-$C_{19}$-Alkyl steht.

**12.** Verwendung nach einem der vorhergehenden Ansprüche, wobei Monomer M1 für Ethylen steht.

**13.** Verwendung nach einem der vorhergehenden Ansprüche, wobei M2 für Vinylacetat steht.

**14.** Verwendung nach einem der vorhergehenden Ansprüche, wobei die Polymere B ausgewählt sind unter Ethylen / Vinylacetat / 2-Propylheptylacrylat / 4-Methyl-2-propylhexylacrylat-Copolymeren, Ethylen / Vinylacetat / 2-Ethylhexylacrylat / 2-Propylheptylacrylat-Copolymeren, Ethylen / Vinylacetat / 2-Ethylhexylacrylat / 2-Propylheptylacrylat / 4-Methyl-2-propylhexylacrylat-Copolymeren, Ethylen / Vinylacetat / 2-Ethylhexylacrylat / Laurylacrylat-Copolymeren, Ethylen / Vinylacetat / 2-Ethylhexylacrylat / Laurylacrylat / Myristylacrylat-Copolymeren, und Ethylen / Vinylacetat / 2-Ethylhexylacrylat / 2-Propylheptylacrylat / 4-Methyl-2-propylhexylacrylat / Laurylacrylat / Myristylacrylat-Copolymeren.

**15.** Verwendung nach einem der vorhergehenden Ansprüche, zur Erniedrigung des CFPP-Werts und/oder des Stockpunkts von Brennstoffölen.

**16.** Polymer, definiert wie in einem der Ansprüche 1 bis 14.

**17.** Brennstoffölzusammensetzung, enthaltend einen größeren Gewichtsanteil eines im Bereich von 120-500 °C siedenden Mitteldestillatbrennstoffs und einen kleineren Gewichtsanteil wenigstens eines Polymers gemäß der Definition in einem der Ansprüche 1 bis 14 und 16.

**18.** Brennstoffölzusammensetzung nach Anspruch 17, wobei die Brennstoffkomponente Biodiesel (aus tierischer oder pflanzlicher Produktion), BTL-Diesel oder GTL-Diesel in Anteilen von 1-100 Gew.-%, insbesondere von 1 bis 20 Gew.-% umfasst.

**19.** Brennstoffölzusammensetzung nach einem der Ansprüche 17 oder 18, ausgewählt unter Dieselkraftstoffen und Heizöl.

**20.** Additivpaket, umfassend wenigstens ein Polymer gemäß der Definition in einem der Ansprüche 1 bis 14 und 16 in Kombination mit wenigstens einem weiteren konventionellen Schmier- oder Brennstofföladditiv.

## Claims

**1.** The use
of a polymer B which is formed from monomers comprising at least one monomer of the formula M1, at least one monomer of the formula M2, at least two monomers of the formula M3, optionally at least one monomer of the formula M4 and optionally at least one monomer of the formula M5, where M1, M2, M3, M4 and M5 have the following general formulae:

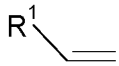
M1

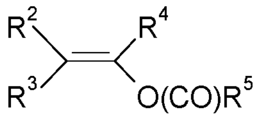
M2

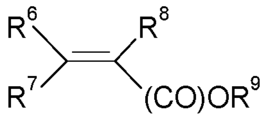
M3

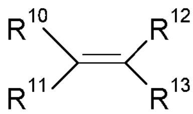
M4

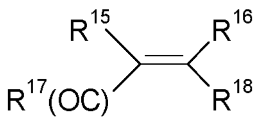
M5

in which

$R^1$ is H or $C_1$-$C_{40}$-alkyl;
$R^2$, $R^3$ and $R^4$ are each independently H or $C_1$-$C_4$-alkyl;
$R^5$ is $C_1$-$C_{20}$-alkyl;
$R^6$, $R^7$ and $R^8$ are each independently H or $C_1$-$C_4$-alkyl;
$R^9$ is $C_4$-$C_{20}$-alkyl in the first monomer M3 and is $C_9$-$C_{20}$-alkyl in the second and in each further monomer M3, where the $R^9$ radicals in the different monomers M3 are different;
$R^{10}$, $R^{11}$ and $R^{12}$ are each independently H or $C_1$-$C_4$-alkyl;
$R^{13}$ is $O(CO)R^{14}$;
$R^{14}$ is $C_3$-$C_{19}$-alkyl;
$R^{15}$ is H or $C_1$-$C_4$-alkyl;
$R^{17}$ is $OR^{19}$;
one of the $R^{16}$ and $R^{18}$ radicals is $-(CO)R^{20}$ and the other radical is H or $C_1$-$C_4$-alkyl;
$R^{20}$ is $OR^{21}$; and
$R^{19}$ and $R^{21}$ are each independently H or $C_1$-$C_{20}$-alkyl;
or $R^{17}$ and $R^{20}$ together form an -O- group;

with the proviso that the average number of carbon atoms of all $R^9$, $R^{13}$, $R^{19}$ and $R^{21}$ radicals is from 8.5 to 20 and that $R^5$ and $R^{14}$ are different, and
wherein $R^9$ in at least one monomer M3 is a branched alkyl radical and the molar ratio of monomers M3 with a branched alkyl $R^9$ radical to monomers M3 with a linear alkyl $R^9$ radical is from 1:5 to 1:0;

wherein polymer B is not a graft copolymer; and
wherein polymer B comprises the monomers M1, M2, M3, optionally M4 and optionally M5 essentially in random distribution;
as cold flow improver for fuel oils and lubricants.

**2.** The use according to claim 1, wherein the average number of carbon atoms in all $R^9$, $R^{13}$, $R^{19}$ and $R^{21}$ radicals is from 9 to 20.

**3.** The use according to any of the preceding claims, wherein the monomers M1, M2, M3, M4 and M5 are present in the polymer in the following molar proportions:

M1: 0.60 to 0.97
M2: 0.02 to 0.25
M3: 0.01 to 0.15
M4: 0 to 0.10
M5: 0 to 0.02.

**4.** The use according to any of the preceding claims, wherein $R^9$ in the first monomer M3 in polymer B is $C_6$-$C_{20}$-alkyl.

**5.** The use according to any of the preceding claims, wherein $R^9$ in one of the monomers M3 in polymer B is 2-propylheptyl.

**6.** The use according to any of claims 1 to 4, wherein $R^9$ in one of the monomers M3 in polymer B is 2-ethylhexyl and $R^9$ in a second monomer M3 is 2-propylheptyl, lauryl or myristyl.

**7.** The use according to any of the preceding claims, wherein the polymer B comprises two monomers M3 of the formulae M3.1 and M3.2 and optionally a further monomer M3 of the formula M3.3:

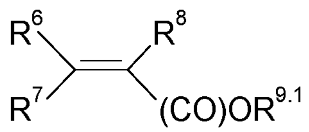

M3.1

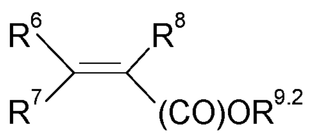

M3.2

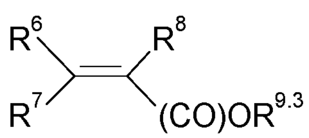

M3.3

where each $R^6$, each $R^7$ and each $R^8$ is independently as defined in claim 1;
$R^{9.1}$ is $C_6$-$C_{20}$-alkyl;
$R^{9.2}$ is $C_9$-$C_{20}$-alkyl; and
$R^{9.3}$ is $C_9$-$C_{20}$-alkyl;

with the proviso that the average number of carbon atoms of the $R^{9.1}$, $R^{9.2}$ and $R^{9.3}$ radicals is from 9 to 20 and that $R^{9.1}$, $R^{9.2}$ and $R^{9.3}$ are different.

**8.** The use according to claim 7, wherein $R^{9.1}$ is 2-propylhept-1-yl.

**9.** The use according to claim 8, wherein $R^{9.1}$ is 2-propylhept-1-yl and $R^{9.2}$ is a decyl isomer different therefrom.

**10.** The use according to claim 7, wherein $R^{9.1}$ is 2-ethylhexyl, $R^{9.2}$ is 2-propylhept-1-yl and $R^{9.3}$ is a decyl isomer different therefrom, or $R^{9.2}$ is lauryl and $R^{9.3}$ is myristyl.

**11.** The use according to any of the preceding claims, wherein the polymer comprises at least one monomer M4 where $R^{14}$ is $C_9$-$C_{19}$-alkyl.

**12.** The use according to any of the preceding claims, wherein monomer M1 is ethylene.

**13.** The use according to any of the preceding claims, wherein M2 is vinyl acetate.

**14.** The use according to any of the preceding claims, wherein the polymers B are selected from ethylene/vinyl acetate/2-propylheptyl acrylate/4-methyl-2-propylhexyl acrylate copolymers, ethylene/vinyl acetate/2-ethylhexyl acrylate/2-propylheptyl acrylate copolymers, ethylene/vinyl acetate/2-ethylhexyl acrylate/2-propylheptyl acrylate/4-methyl-2-propylhexyl acrylate copolymers, ethylene/vinyl acetate/2-ethylhexyl acrylate/lauryl acrylate copolymers, ethylene/vinyl acetate/2-ethylhexyl acrylate/lauryl acrylate/myristyl acrylate copolymers, and ethylene/vinyl acetate/2-ethylhexyl acrylate/2-propylheptyl acrylate/4-methyl-2-propylhexyl acrylate/lauryl acrylate/myristyl acrylate copolymers.

**15.** The use according to any of the preceding claims for lowering the CFPP value and/or the pour point of fuel oils.

**16.** A polymer as defined in any of claims 1 to 14.

**17.** A fuel oil composition comprising a major proportion by weight of a middle distillate fuel which boils in the range of 120-500°C and a minor proportion by weight of at least one polymer as defined in any of claims 1 to 14 and 16.

**18.** The fuel oil composition according to claim 17, wherein the fuel component comprises biodiesel (from animal or vegetable production), BTL diesel or GTL diesel in proportions of 1-100% by weight, especially of 1 to 20% by weight.

**19.** The fuel oil composition according to either of claims 17 and 18, selected from diesel fuels and heating oil.

**20.** An additive package comprising at least one polymer as defined in any of claims 1 to 14 and 16 in combination with at least one further conventional lubricant or fuel oil additive.

## Revendications

**1.** Utilisation d'un polymère B, qui est constitué d'au moins un monomère de formule M1, d'au moins un monomère de formule M2, d'au moins deux monomères de formule M3, éventuellement d'au moins un monomère de formule M4 et éventuellement d'au moins un monomère de formule M5, M1, M2, M3, M4 et M5 ayant les formules générales suivantes :

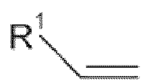

M1

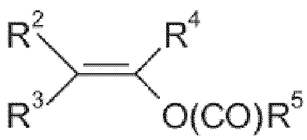

M2

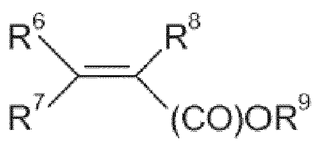

M3

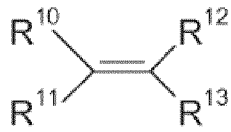

M4

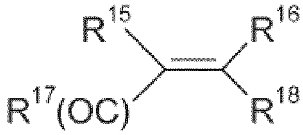

M5

dans lesquelles

$R^1$ représente H ou un groupe alkyle en $C_1$-$C_{40}$ ;
$R^2$, $R^3$ et $R^4$ représentent chacun indépendamment de l'autre H ou un groupe alkyle en $C_1$-$C_4$ ;
$R^5$ représente un groupe alkyle en $C_1$-$C_{20}$ ;
$R^6$, $R^7$ et $R^8$ représentent chacun indépendamment des autres H ou un groupe alkyle en $C_1$-$C_4$ ;
$R^9$ représente dans le premier monomère M3 un groupe alkyle en $C_4$-$C_{20}$, et dans le deuxième et chaque monomère M3 suivant un groupe alkyle en $C_9$-$C_{20}$, les radicaux $R^9$ étant différents dans les différents monomères M3 ;
$R^{10}$, $R^{11}$ et $R^{12}$ représentent chacun indépendamment des autres H ou un groupe alkyle en $C_1$-$C_4$ ;
$R^{13}$ représente $O(CO)R^{14}$ ;
$R^{14}$ représente un groupe alkyle en $C_3$-$C_{19}$ ;
$R^{15}$ représente H ou un groupe alkyle en $C_1$-$C_4$ ;
$R^{17}$ représente $OR^{19}$ ;
l'un des radicaux $R^{16}$ et $R^{18}$ représente $-(CO)R^{20}$ et l'autre radical H ou un groupe alkyle en $C_1$-$C_4$ ;
$R^{20}$ représente $OR^{21}$ ; et
$R^{19}$ et $R^{21}$ représentent chacun indépendamment de l'autre H ou un groupe alkyle en $C_1$-$C_{20}$ ;
ou $R^{17}$ et $R^{20}$ forment ensemble un groupe -O- ;

à la condition que le nombre moyen des atomes de carbone de tous les radicaux $R^9$, $R^{13}$, $R^{19}$ et $R^{21}$ soit de 8,5 à 20, et que $R^5$ et $R^{14}$ soient différents, et
dans au moins un monomère M3, $R^9$ représentant un radical alkyle à chaîne ramifiée, et le rapport en moles des monomères M3 ayant un radical alkyle $R^9$ à chaîne ramifiée aux monomères M3 ayant un radical alkyle $R^9$ à chaîne droite étant de 1:5 à 1:0 ;
le polymère B n'étant pas un copolymère greffé ; et
le polymère B contenant les monomères M1, M2, M3 éventuellement M4 et éventuellement M5 dans une répartition essentiellement statistique ;
en tant qu'agent améliorant l'écoulement à froid des huiles combustibles et des lubrifiants.

**2.** Utilisation selon la revendication 1, pour laquelle le nombre moyen des atomes de carbone de tous les radicaux $R^9$, $R^{13}$, $R^{19}$ et $R^{21}$ est de 9 à 20.

**3.** Utilisation selon l'une des revendications précédentes, pour laquelle les monomères M1, M2, M3, M4 et M5 sont contenus dans le polymère selon les proportions molaires suivantes :

M1 : 0,60 à 0,97
M2 : 0,02 à 0,25
M3 : 0,01 à 0,15
M4 : 0 à 0,10
M5 : 0 à 0,02.

**4.** Utilisation selon l'une des revendications précédentes, pour laquelle, dans le polymère B, $R^9$ dans le premier monomère M3 représente un groupe alkyle en $C_6$-$C_{20}$.

**5.** Utilisation selon l'une des revendications précédentes, pour laquelle, dans le polymère B, dans l'un des monomères M3, $R^9$ représente le groupe 2-propylheptyle.

6. Utilisation selon l'une des revendications 1 à 4, pour laquelle, dans le polymère B, dans l'un des monomères M3, $R^9$ représente le groupe 2-éthyhexyle et, dans un deuxième monomère M3, $R^9$ représente le groupe 2-propylheptyle, lauryle ou myristyle.

7. Utilisation selon l'une des revendications précédentes, pour laquelle le polymère B comprend deux monomères M3 de formules M3.1 et M3.2 et éventuellement un monomère M3 supplémentaire de formule M3.3 :

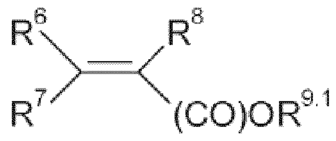

M3.1

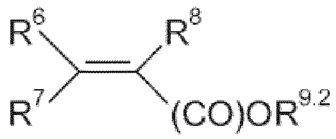

M3.2

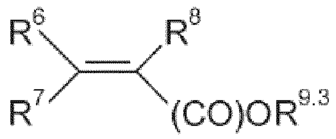

M3.3

où chaque $R^6$, chaque $R^7$ et chaque $R^8$ sont d'une manière indépendante définis comme dans la revendication 1 ;
$R^{9.1}$ représente un groupe alkyle en $C_6$-$C_{20}$ ;
$R^{9.2}$ représente un groupe alkyle en $C_9$-$C_{20}$ ; et
$R^{9.3}$ représente un groupe alkyle en $C_9$-$C_{20}$ ;

à la condition que le nombre moyen d'atomes de carbone des radicaux $R^{9.1}$, $R^{9.2}$ et $R^{9.3}$ soit de 9 à 20, et que $R^{9.1}$, $R^{9.2}$ et $R^{9.3}$ soient différents.

8. Utilisation selon la revendication 7, pour laquelle $R^{9.1}$ représente le groupe 2-propylhept-1-yle.

9. Utilisation selon la revendication 8, pour laquelle $R^{9.1}$ représente le groupe 2-propylhept-1-yle et $R^{9.2}$ représente un isomère du groupe décyle différent de celui-ci.

10. Utilisation selon la revendication 7, pour laquelle $R^{9.1}$ représente le groupe 2-éthylhexyle, $R^{9.2}$ le groupe 2-propylhept-1-yle et $R^{9.3}$ un isomère du groupe décyle différent de celui-ci, ou $R^{9.2}$ représente le groupe lauryle et $R^{9.3}$ le groupe myristyle.

11. Utilisation selon l'une des revendications précédentes, pour laquelle le polymère comprend au moins un monomère M4, $R^{14}$ représentant un groupe alkyle en $C_9$-$C_{19}$.

12. Utilisation selon l'une des revendications précédentes, pour laquelle le monomère M1 représente l'éthylène.

13. Utilisation selon l'une des revendications précédentes, pour laquelle M2 représente l'acétate de vinyle.

14. Utilisation selon l'une des revendications précédentes, pour laquelle le polymère B est choisi parmi les copolymères éthylène/acétate de vinyle/acrylate de 2-propylheptyl/acrylate de 4-méthyl-2-propylhexyle, les copolymères éthylène/acétate de vinyle/acrylate de 2-éthylhexyle/acrylate de 2-propylheptyle, les copolymères éthylène/acétate de vinyle/acrylate de 2-éthylhexyle/acrylate de 2-propylheptyle/acrylate de 4-méthyl-2-propylhexyle, les copolymères éthylène/acétate de vinyle/acrylate de 2-éthylhexyle/acrylate de lauryle, les copolymères éthylène/acétate de vinyle/acrylate de 2-éthylhexyle/acrylate de lauryle/acrylate de myristyle et les copolymères éthylène/acétate de vinyle/acrylate de 2-éthylhexyle/acrylate de 2-propylheptyle/acrylate de 4-méthyl-2-propylhexyle/acrylate de lauryle/acrylate de myristyle.

**15.** Utilisation selon l'une des revendications précédentes, pour abaisser la valeur de la CFPP et/ou le point d'écoulement d'huiles combustibles.

**16.** Polymère défini comme dans l'une des revendications 1 à 14.

**17.** Composition d'huile combustible, contenant une proportion pondérale plus grande d'un combustible distillat moyen ayant un point d'ébullition compris dans la plage de 120 à 500 °C et une proportion pondérale plus petite d'au moins un polymère selon la définition de l'une des revendications 1 à 14 et 16.

**18.** Composition d'huile combustible selon la revendication 17, dans laquelle le composant combustible comprend un biodiesel (d'origine animale ou végétale), un diesel BTL ou un diesel GTL selon des proportions de 1 à 100 % en poids, en particulier de 1 à 20 % en poids.

**19.** Composition d'huile combustible selon l'une des revendications 17 ou 18, choisie parmi les combustibles diesel et le fioul.

**20.** Préformulation d'additifs, comprenant au moins un polymère selon la définition de l'une des revendications 1 à 14 et 16 en combinaison avec au moins un additif classique supplémentaire pour lubrifiant ou combustible.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3038479 A
- US 3627838 A
- US 3961961 A
- EP 0261957 A
- DE 3141507 A
- DE 2515805 A
- EP 0721492 A
- WO 2005054314 A
- EP 157106 A
- EP 244855 A
- EP 0007590 A
- US 6300430 B
- EP 0813550 A
- EP 0061895 A
- US 4491455 A
- WO 0044857 A
- DE 19848621 A
- DE 19622052 A
- EP 398101 B
- WO 0162874 A
- EP 1357168 A


### In der Beschreibung aufgeführte Nicht-Patentliteratur


- Ullmann's Encyclopedia of Industrial Chemistry. VCH Weinheim, 1996, vol. A 28, 146
- **N. A. PLATE ; V. P. SHIBAEV.** Comb-Like Polymers. Structure and Properties. *J. Poly. Sci. Macromolecular Revs.,* 1974, vol. 8, 117-253
- Ullmanns Encyclopedia of Industrial Chemistry. 2000